# EUROPEAN PATENT APPLICATION

(11) **EP 1 321 281 A1**
(43) Date of publication of application: **25.06.2003**
(21) Application number: 01972555.5
(22) Date of filing: 28.09.2001
(51) Int. Cl.: B29C 65/34, F16L 47/03, G06F 17/30, B29L 23/00

(54) **DATA TRANSFERRING METHOD AND DEVICE FOR ELECTRIC FUSION WELDING DEVICE**

(30) Priority: 28.09.2000 JP 2000295666; 26.07.2001 JP 2001225228
(71) Applicant: Mitsui Chemicals, Inc., Tokyo 100-6070 (JP)
(72) Inventor: IWASAKI, Masaya, Mitsui Chemicals, Inc., Kuga-gun, Yamaguchi 740-0061 (JP); SANO, Keiji, Mitsui Chemicals, Inc., Kuga-gun, Yamaguchi 740-0061 (JP)
(74) Representative: HOFFMANN EITLE
(86) International application number: JP0108496
(87) International publication number: WO02026477

(57) **Abstract**

The invention provides a work data transfer apparatus in which, when transferring work data stored in an electro-fusion apparatus 1 to a host computer 4, the time required to transfer the work data is reduced by eliminating the need to transfer the work data already transferred to the host computer 4. Control means 15 in the host computer 4 includes: a management unit 22 which sends a transmit request to request the electro-fusion apparatus 1 to transmit a serial number IDX, i.e., the index of the apparatus, and work data stored in the apparatus 1; a search unit 23 which retrieves the requested data from a data base 16 by using the serial number transmitted from the electro-fusion apparatus 1 as the key, and stores the retrieved data in a storage unit 24; and a matching unit 25. The matching unit 25 matches the indexes IDY of the work data stored in the electro-fusion apparatus 1 against the indexes IDX of the work data stored in the storage unit 24 and, if there is an index IDYi of data that is not stored in the storage unit 24, then transfers the index IDYi to the management unit 22. Based on the result of the matching, the management unit 22 requests the electro-fusion apparatus 1 for transmission of the work data associated with the index IDYi.

A host computer matches indexes of work data stored in an electro-fusion apparatus against indexes of work data transferred to the host computer. Based on results of the matching, the host computer requests the electro-fusion apparatus for transmission of yet untransferred work data.

The time required to transfer work data is reduced by eliminating the need to transfer the work data already transferred from the electro-fusion apparatus to the host computer.

## Description

### Technical Field

The present invention relates to a method and apparatus whereby work data recorded in relation to an electro-fusion joint used to connect pipes in pipe installation work of resin pipes, such as gas pipes, water or sewage pipes, or hot water supply pipes, is transferred (that is, transmitted) to a host computer.

### Background Art

To manage pipe installation work involving the use of electro-fusion joints, recent practice is that work data, including joint information concerning the electro-fusion joints used, which is read from the bar codes attached to the electro-fusion joints, work information concerning the work done, which is entered by the operator in charge, apparatus information concerning the electro-fusion apparatus used, and electro-fusion data, is recorded in the electro-fusion apparatus. After the work is finished, the electro-fusion apparatus having such a traceability function is brought back to the office of the construction company, and the work data stored in the electro-fusion apparatus is transferred to the host computer at the office.

After the work data stored in the electro-fusion apparatus has been transferred to the host computer, the work data is left in the electro-fusion apparatus for backup purposes. Therefore, the amount of stored data gradually increases as new data is added day by day. As the amount of stored data exceeds the memory capacity of the electro-fusion apparatus, old data is sequentially overwritten with new data, and thus the electro-fusion apparatus is always kept filled with data up to the capacity of the memory.

The problem here is that it takes much time to transfer the work data stored in the electro-fusion apparatus to the host computer, because work data in all memory areas has to be transmitted to the host computer each time there arises the need to transfer the work data to the host computer.

A first object of the present invention is to provide a transfer method and apparatus aimed at reducing the transfer time required to transfer work data from the electro-fusion apparatus to the host computer. A second object of the invention is to provide a work data transfer method and apparatus that can efficiently transfer work data by setting the transfer amount of work data appropriately according to the kind of work, in view of the fact that the need to transfer work data from the electro-fusion apparatus to the host computer differs depending on the kind of work, that is, some data needs to be transferred at frequent intervals, while other data needs to be transferred after being accumulated for a long period of time. A third object of the invention is to provide a work data transfer method and apparatus that can make settings appropriate to the operator's data management system, concerning the period and the number of times that work data is to be transferred.

Another object of the invention is to provide a controller for the electro-fusion apparatus and a host computer for the electro-fusion apparatus, wherein provisions are made to simplify the transfer of work data.

A further object of the invention is to provide a data transfer apparatus wherein provisions are made to simplify data transfer from a controller to a host computer not only in the field relating to the electro-fusion apparatus but also in other technical fields.

### Disclosure of Invention

The invention according to claim 1 concerns a work data transfer method that accomplishes the first object, and provides a method for transferring work data concerning electro-fusion joint installation work which is stored in an electro-fusion apparatus to a host computer after electro-fusion work is completed, wherein of the work data stored in the electro-fusion apparatus, only data yet untransmitted to the host computer is transmitted thereto.

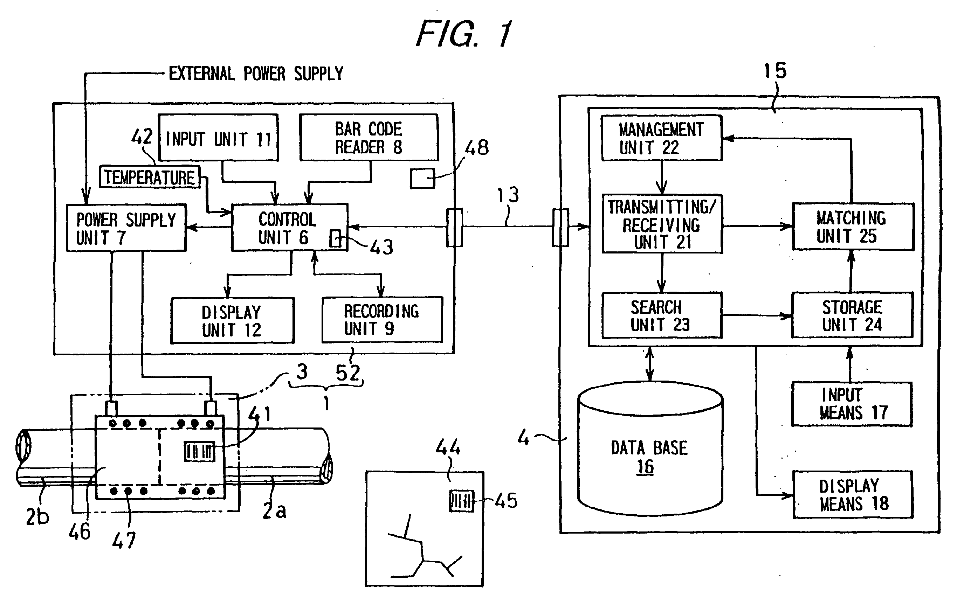

The invention according to claim 2 concerns a method for transmitting only untransmitted data out of the work data stored in the electro-fusion apparatus, as will be described later with reference to Figures 1 to 15, and the method is related to the invention of claim 1 and includes the steps of: transmitting an ID of the electro-fusion apparatus to the host computer, for example, a serial number or a code number uniquely assigned to the electro-fusion apparatus, from the electro-fusion apparatus to the host computer; retrieving work data with the transmitted ID of the electro-fusion apparatus as a key from a data base in the host computer; and matching indexes of the work data retrieved from the data base against indexes of the work data recorded in the electro-fusion apparatus and, when the indexes recorded in the electro-fusion apparatus contain an index that does not match any one of the indexes stored in the data base, then transferring only data associated with that index from the electro-fusion apparatus to the host computer.

According to the invention, all work data that are not stored in the data base in the host computer are transferred from the electro-fusion apparatus to the host computer.

In the invention, the matching of the indexes may be done at the host computer side or at the electro-fusion apparatus side.

The term index used here includes, but not limited to, an electro-fusion number that is assigned to work data recorded for each electro-fusion joint installation, and when the total number of electro-fusion operations is 100, for example, the 100th electro-fusion work is assigned an electro-fusion number "100". The same applies to the inventions hereinafter described.

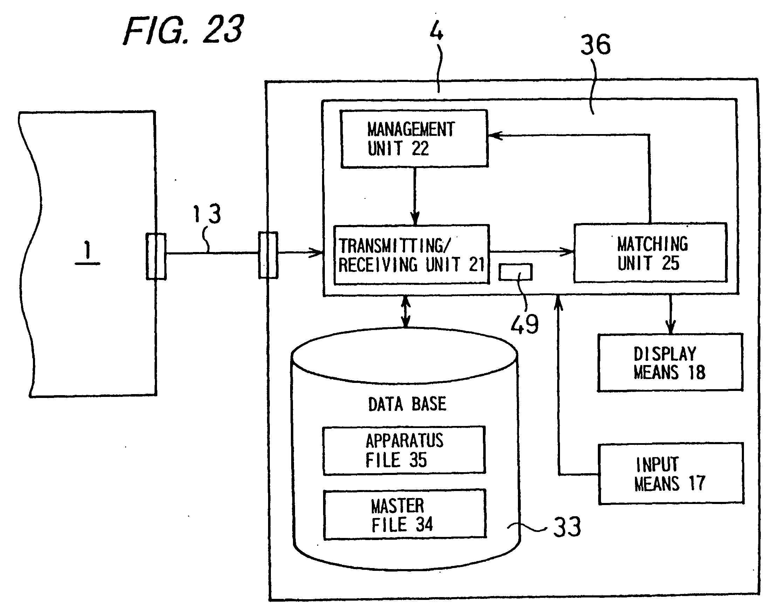

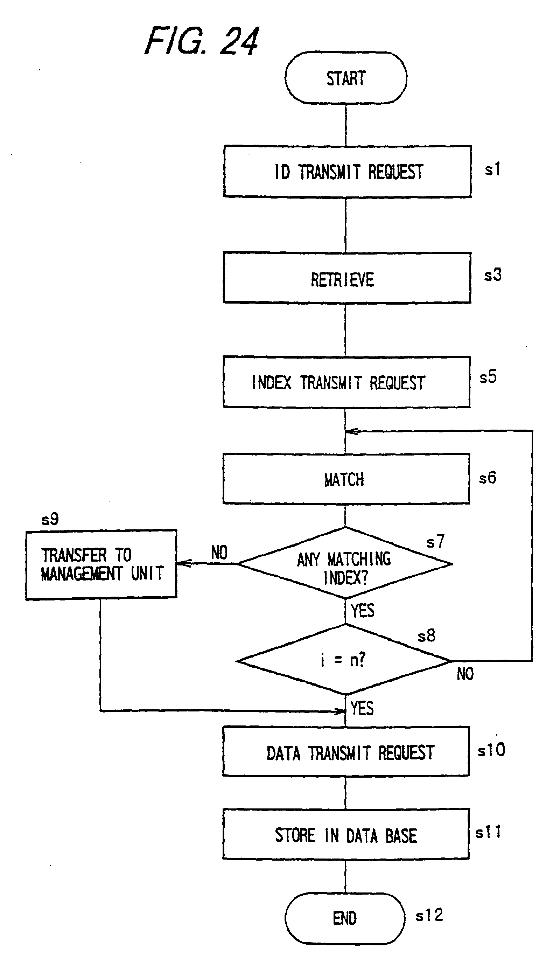

The invention according to claim 3 concerns another method for transmitting only untransmitted data, as shown in Figures 23 and 24, and is related to the invention of claim 2, wherein the step in which the work data with the ID of the electro-fusion apparatus as the key is retrieved from the data base and stored is replaced by a step in which the work data stored in the data base is reordered using sort means 49 by ID of the electro-fusion apparatus, and the indexes corresponding to the electro-fusion apparatus, reordered in the data base by ID of the electro-fusion apparatus, are matched against the indexes recorded in the electro-fusion apparatus.

More specifically, in the invention according to claim 1, the method for transferring the work data to the host computer comprises the steps of: reordering the work data in the data base at the host computer by ID of the electro-fusion apparatus; transmitting the ID of the electro-fusion apparatus from the electro-fusion apparatus to the host computer; and matching indexes of the work data stored in the data base and corresponding to the transmitted ID of the electro-fusion apparatus, against indexes of the work data recorded in the electro-fusion apparatus and, when the indexes recorded in the electro-fusion apparatus contain an index that does not match any one of the indexes stored in the data base, then transferring only data associated with that index from the electro-fusion apparatus to the host computer.

According to the invention, since the work data in the data base is reordered by ID of the electro-fusion apparatus, the step of retrieving the work data with the ID as the key from the data base after requesting the transmission of the ID of the electro-fusion apparatus, as required in the invention according to claim 1, is eliminated, and as a result, the time required to accomplish the transfer is correspondingly reduced.

In the invention also, the matching of the indexes may be done at the host computer side or at the electro-fusion apparatus side.

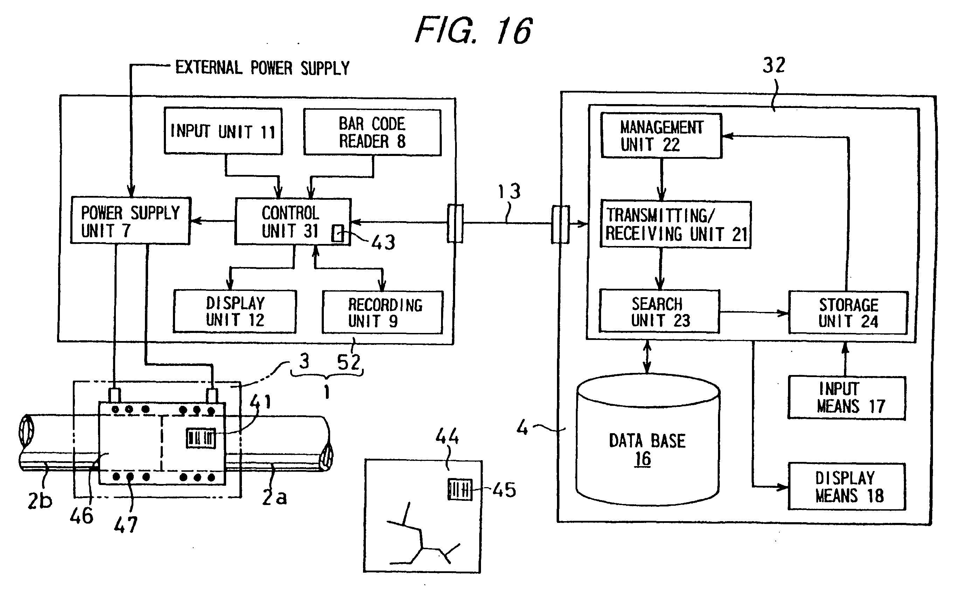

The invention according to claim 4 concerns still another method for transmitting only untransmitted data, as shown in Figures 16 to 19, and the method is related to the invention of claim 1 and includes the steps of: transmitting an ID of the electro-fusion apparatus from the electro-fusion apparatus to the host computer; of indexes of the work data stored in the data base and corresponding to the transmitted ID of the electro-fusion apparatus, transmitting the newest index of the work data, that is, the index of the work data assigned an electro-fusion number indicating the largest number of electro-fusion operations, to the electro-fusion apparatus; and transferring to the host computer all work data having indexes newer than the work data index transmitted to the electro-fusion apparatus.

According to the invention, the step of matching the indexes, as required in the earlier described inventions, may be eliminated.

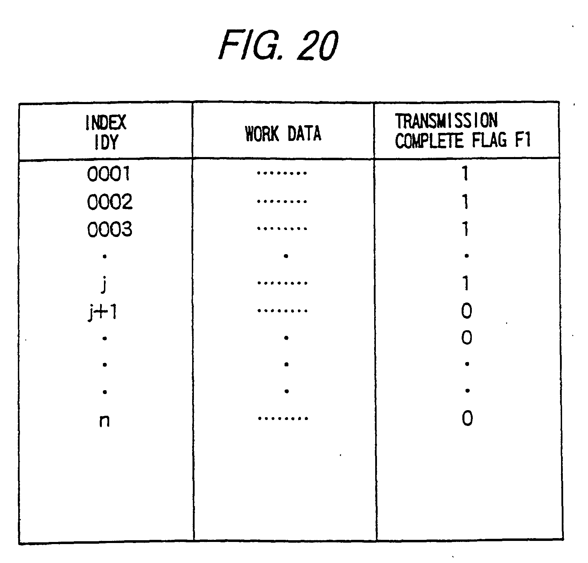

The invention according to claim 5 concerns yet another method for transmitting only untransmitted data, as shown in Figures 20 to 22, Figures 27 to 29, and Figures 30 and 31, and is related to the invention of claim 1, wherein an ID of the electro-fusion apparatus and out of the work data stored in the apparatus work data yet untransmitted to the host computer is transmitted to the host computer by operating an input unit of the electro-fusion apparatus.

According to the invention, the step of sending a request from the host computer requesting the electro-fusion apparatus to transmit the ID of the apparatus can be eliminated, and the data can be transmitted by just operating the input unit of the electro-fusion apparatus. In this case, of the work data stored in the electro-fusion apparatus, a flag is set for data that has been transmitted normally, and only data for which the flag is not set is transmitted to the host computer.

According to the invention of claim 5, untransmitted data can be transmitted by just operating the input unit of the electro-fusion apparatus.

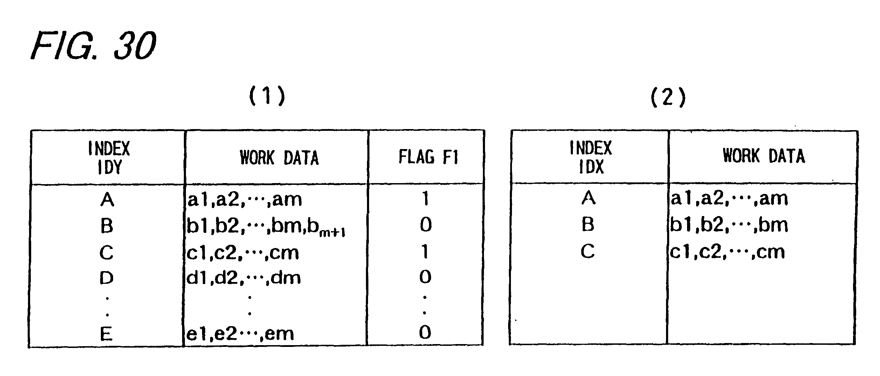

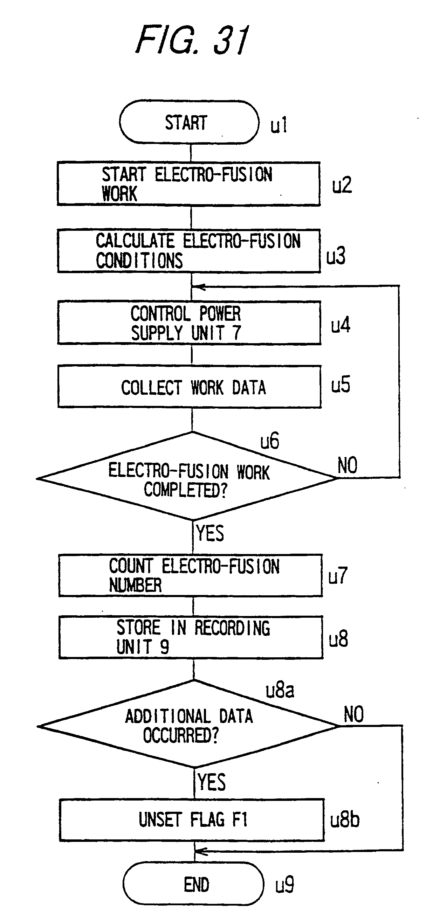

The invention according to claim 6 concerns a method for transferring work data concerning electro-fusion joint installation work which is stored in an electro-fusion apparatus to a host computer after electro-fusion work is completed, wherein, as shown in Figures 30 and 31, selection between a mode for transmitting only untransmitted data out of the work data stored in the apparatus and a mode for transmitting all the stored work data is made by operating an input unit of the electro-fusion apparatus.

According to the invention of claim 6, of the work data stored in the electro-fusion apparatus, only untransmitted data or, if necessary, all the stored data, can be transmitted.

There are cases where it is desired to transfer all data stored in the electro-fusion apparatus, including already transmitted data, for example, when the host computer is replaced by a new one, or when the data stored in the host computer is lost due, for example, to an erroneous operation by an operator.

According to the invention, when transferring work data to the host computer, usually the mode for transmitting only untransmitted data is selected to transmit only untransmitted data, but if needed, the all data transmission mode is selected and all the data stored in the electro-fusion apparatus is transmitted to the host computer.

The invention according to claim 7 concerns a transfer apparatus that accomplishes the first object, and provides, as shown in Figures 1 to 12, an apparatus for transferring work data concerning electro-fusion joint installation work which is stored in an electro-fusion apparatus to a host computer via communication means after electro-fusion work is completed, comprising a data base provided in the host computer, for storing the work data concerning the work performed using the electro-fusion apparatus; and control means provided in the host computer, having a function for requesting the electro-fusion apparatus to transmit an ID of the electro-fusion apparatus and indexes of the work data recorded in the electro-fusion apparatus, a function for retrieving work data with the transmitted ID of the electro-fusion apparatus as a key from the data base, and a function for matching the indexes of the retrieved work data against the indexes of the work data transmitted from the electro-fusion apparatus, and for requesting the electro-fusion apparatus to transmit work data whose index is not stored in the data base.

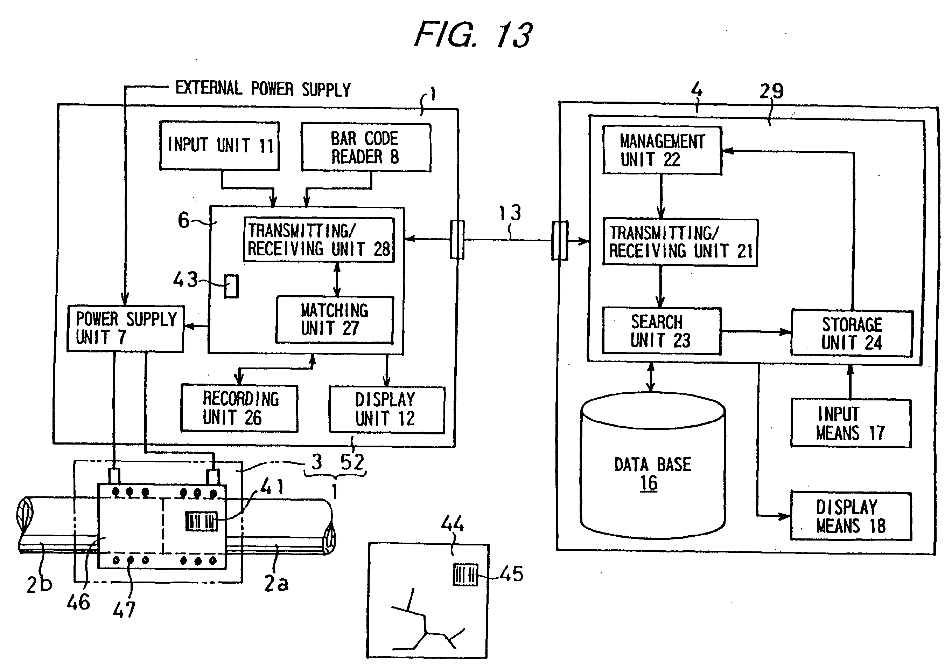

The invention according to claim 8 concerns another example of the transfer apparatus that accomplishes the first object, and provides, as shown in Figures 13 to 15, an apparatus for transferring work data concerning electro-fusion joint installation work which is stored in an electro-fusion apparatus to a host computer via communication means after electro-fusion work is completed, comprising a data base, provided in the host computer, for storing the work data concerning the work performed using the electro-fusion apparatus; control means, provided in the host computer, having a function for requesting the electro-fusion apparatus to transmit an ID of the electro-fusion apparatus, and a function for retrieving work data with the transmitted ID of the electro-fusion apparatus as a key from the data base, and for transmitting indexes of the retrieved work data to the electro-fusion apparatus; a recording unit provided in the elctro-fusion apparatus, for recording the work data for each electro-fusion joint installation by assigning an index comprising an electro-fusion number; and a control unit provided in the electro-fusion apparatus, having a function for controlling the electro-fusing of an electro-fusion joint to a resin pipe, based on an input condition such as the joint information, and a function for matching the indexes of the work data recorded in the recording unit against the indexes transmitted from the host computer and, when there is an index that does not match any one of the indexes transmitted fromthe host computer, then transmitting work data associated with that index to the host computer.

In the invention according to claim 7, the indexes of the work data recorded in the electro-fusion apparatus are matched in the host computer against the indexes of the work data stored in the data base of the host computer, and as a result, a request is sent to the electro-fusion apparatus, requesting the transmission of work data that is not stored in the data base. On the other hand, in the invention according to claim 8, the above matching is done at the electro-fusion apparatus side, and work data that is not stored in the data base is transmitted to the host computer.

The communication means used in each of the above inventions may be implemented by a cable connecting between the electro-fusion apparatus and the host computer or by an infrared optical communication link, a telephone line, or a wireless communication line.

According to the inventions of claims 1, 2, 7, and 8, when transferring work data stored in the electro-fusion apparatus to the host computer, only untransmitted work data or work data not stored in the data base of the host computer is transferred to the host computer; this serves to reduce the time required to transfer data, compared with the prior art method that transfers all the work data stored in the electro-fusion apparatus.

The invention according to claim 9 is shown in Figures 23 and 24, and is related to the invention of claim 7, wherein the control means has a function for reordering the work data in the data base by ID of the electro-fusion apparatus by using sort means 49, instead of the function for retrieving the work data with the ID of the electro-fusion apparatus as the key from the data base.

According to the inventions of claims 3 and 9, since the work data in the data base is reordered by ID of the electro-fusion apparatus, the time required to match the indexes of the work data stored in the data base against the indexes of the work data recorded in the electro-fusion apparatus can be reduced, and thus the time required to transfer work data can be reduced correspondingly.

The invention according to claim 10 concerns, as shown in Figures 16 to 19, an apparatus for transferring work data concerning electro-fusion joint installation work which is stored in an electro-fusion apparatus to a host computer via communication means after electro-fusion work is completed, the apparatus comprising a data base, provided in the host computer, for storing the work data concerning the work performed using the electro-fusion apparatus; control means provided in the host computer, having a function for requesting the electro-fusion apparatus to transmit an ID of the electro-fusion apparatus, and a function for retrieving work data with the transmitted ID of the electro-fusion apparatus as a key from the data base and, of indexes of the retrieved work data, transmitting the newest index of the work data to the electro-fusion apparatus; a recording unit provided in the electro-fusion apparatus, for recording the work data for each electro-fusion joint installation by assigning an index comprising an electro-fusion number; and a control unit provided in the electro-fusion apparatus, having a function for controlling the electro-fusing of an electro-fusion joint to a resinpipe, based on an input condition such as joint information, and a function for reading, from the recording unit, work data having newer indexes than the index transmitted from the host computer, and for transmitting the readout work data to the host computer.

According to the inventions of claims 4 and 10, since there is no need to match the indexes of the work data stored in the data base against the indexes of the work data recorded in the electro-fusion apparatus as in the previously described inventions, the time required to transfer work data is correspondingly reduced.

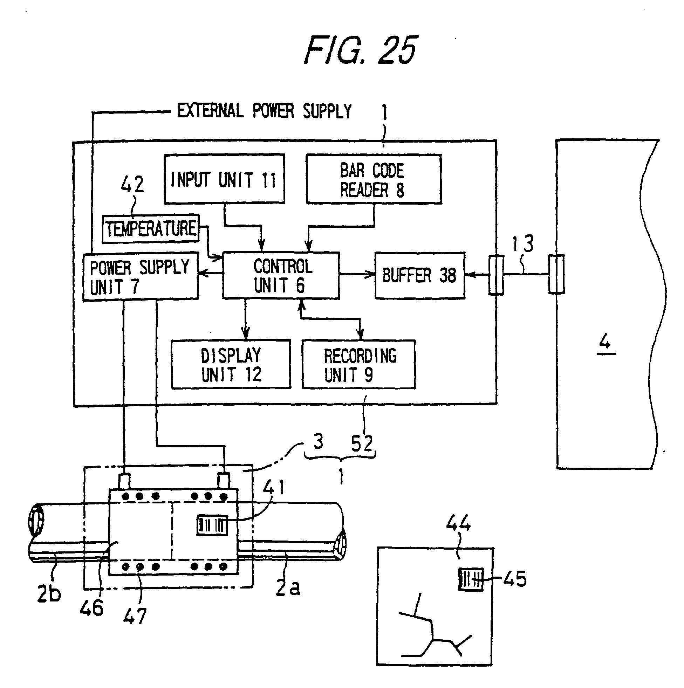

The invention according to claim 11 concerns a transfer method that accomplishes the second object, and provides, as shown in Figures 25 to 29, a method for transferring work data concerning electro-fusion joint installation work which is stored in an electro-fusion apparatus to a host computer after electro-fusion work is completed, wherein the number of electro-fusion work data sets to be transferred at a time can be set large when the transfer is performed at long intervals of time, and small when the transfer is performed at short intervals of time.

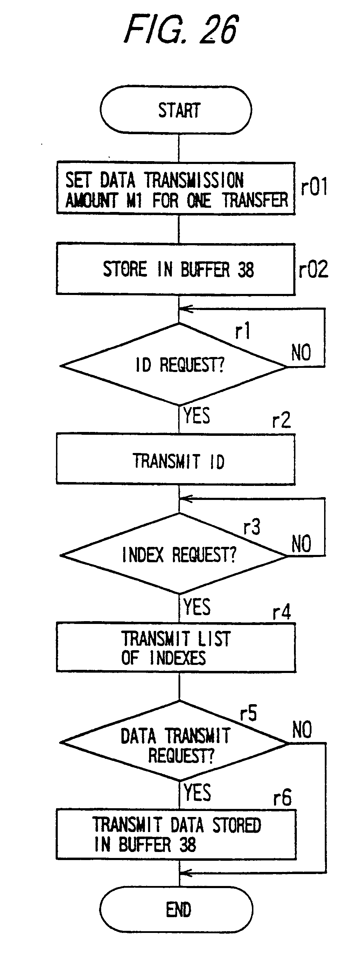

The invention according to claim 12 concerns a transfer apparatus that accomplishes the second object, and provides, as shown in Figures 25 and 26, an apparatus for transferring work data concerning electro-fusion joint installation work which is stored in an electro-fusion apparatus to a host computer via communication means after electro-fusion work is completed, wherein the electro-fusion apparatus comprises: a recording unit for recording the work data for each electro-fusion joint installation by assigning an electro-fusion number in the order of installation, a buffer, whose storage capacity is variably settable, for storing work data in descending order of electro-fusion numbers starting with the work data assigned the newest electro-fusion number out of the work data recorded in the recording unit; and a control unit having a function for controlling the electro-fusing of an electro-fusion joint to a resin pipe, based on an input condition such as joint information, and a function for transferring the work data stored in the buffer to the host computer.

According to the inventions of claims 11 and 12, an appropriate amount of data can be transferred according to the frequency of transfer from the electro-fusion apparatus to the host computer.

According to the inventions of claims 11 and 12, the number of data sets to be transferred to the host computer can be set as desired by the operator.

The inventions according to claims 13 and 14, respectively, concern a transfer method and apparatus that accomplish the third object: the invention according to claim 13 concerns a method for transferring work data concerning electro-fusion joint installation work which is stored in an electro-fusion apparatus to a host computer after electro-fusion work is completed, wherein the transfer of the work data is performed in accordance with a preset period or a preset number of electro-fusion operations, and the invention according to claim 14 concerns an apparatus for transferring work data concerning electro-fusion joint installation work which is stored in an electro-fusion apparatus to a host computer via communication means after electro-fusion work is completed, wherein the electro-fusion apparatus comprises: a recording unit for recording the work data for each electro-fusion joint installation; and a control unit having a function for controlling the electro-fusing of an electro-fusion joint to a resin pipe, based on an input condition such as joint information, and a function for transferring the work data recorded in the recording unit to the host computer for every preset period or every preset number of electro-fusion operations.

According to the inventions of claims 13 and 14, the work data can be transferred to the host computer by setting the period or the number of electro-fusion operations as desired in accordance with the operator's data management system.

The invention according to claim 15 concerns, as will be described later with reference to Figures 20 to 22, Figures 27 to 29, and Figures 30 and 31, an apparatus for transferring work data concerning electro-fusion joint installation work which is stored in an electro-fusion apparatus to a host computer via communication means after electro-fusion work is completed, comprising: a data base, provided in the host computer, for storing the work data concerning the work performed using the electro-fusion apparatus; control means, provided in the host computer, for storing the work data transferred from the electro-fusion apparatus into the data base for each electro-fusion work index in association with an ID of the electro-fusion apparatus; flag setting means, provided in the electro-fusion apparatus, for setting a transmission complete flag F1 for the work data, on an index by index basis, transmitted from the electro-fusion apparatus to the host computer; a recording unit, provided in the electro-fusion apparatus, for storing the index, the work data, and the transmission complete flag for each electro-fusion operation in association with each other; andmeans, provided in the electro-fusion apparatus, for reading from the recording unit, on an index by index basis, the work data for which the transmission complete flag F1 is not set, and for transmitting the readout work data to the host computer.

The invention according to claim 16 is one that is shown in Figures 30 and 31, and is related to the invention of claim 15, wherein the flag setting means unsets the transmission complete flag F1 when additional data bₘ₊₁ is added to the work data already transmitted to the host computer.

The invention according to claim 17 concerns, as shown in Figures 1 to 12, an electro-fusion apparatus controller in an apparatus for transferring work data concerning electro-fusion joint installation work which is stored in an electro-fusion apparatus to a host computer via communication means after electro-fusion work is completed, the controller comprising: a recording unit for storing work data together with a corresponding index IDY for each electro-fusion operation performed using the electro-fusion apparatus; index transmitting means for reading the index IDY from the recording unit and transmitting the same; and work data transmitting means for receiving a designated index IDYi associated with the work data to be transmitted from the electro-fusion apparatus, out of the indexes IDY transmitted by the index transmitting means to the host computer, and for transmitting the work data associated with the designated index IDYi by reading out the work data from the recording unit.

The invention according to claim 18 concerns, as shown in Figures 13 to 15, an electro-fusion apparatus controller in an apparatus for transferring work data concerning electro-fusion joint installation work which is stored in an electro-fusion apparatus to a host computer via communication means after electro-fusion work is completed, the controller comprising: a recording unit for storing work data together with a corresponding index IDY for each electro-fusion operation performed using the electro-fusion apparatus; and means 6 for receiving indexes IDX from the host computer, and for matching the indexes IDY read from the recording unit against the received indexes IDX and, if the indexes IDY read from the recording unit contain a new index IDYi that does not match any one of the received indexes IDX, then transmitting the new index IDYi to the host computer together with the work data associated with the new index IDYi.

The invention according to claim 19 concerns, as shown in Figures 16 to 19, an electro-fusion apparatus controller in an apparatus for transferring work data concerning electro-fusion joint installation work which is stored in an electro-fusion apparatus to a host computer via communication means after electro-fusion work is completed, the controller comprising: a recording unit for storing work data together with a corresponding index IDY for each electro-fusion operation performed using the electro-fusion apparatus; and means for receiving from the host computer the newest index k stored in the host computer, and for reading, from the recording unit, work data having newer indexes (k+1) to L than the newest index k received from the host computer, and transmitting the readout work data to the host computer.

The invention according to claim 20 concerns, as shown in Figures 20 to 22, Figures 27 to 29, and Figures 30 and 31, an electro-fusion apparatus controller in an apparatus for transferring work data concerning electro-fusion joint installation work which is stored in an electro-fusion apparatus to a host computer via communication means after electro-fusion work is completed, the controller comprising: a recording unit for storing work data together with a corresponding index IDY for each electro-fusion operation performed using the electro-fusion apparatus; flag setting means for setting a flag F1 for work data that is stored in the recording unit but not yet transmitted to the host computer; and means for receiving a transmit request signal from the host computer, and for transmitting to the host computer the work data for which the flag F1 is not set by the flag setting means.

The invention according to claim 21 concerns, as shown in Figures 25 and 26, an electro-fusion apparatus controller in an apparatus for transferring work data concerning electro-fusion joint installation work which is stored in an electro-fusion apparatus to a host computer via communication means after electro-fusion work is completed, the controller comprising: a recording unit for storing work data together with a corresponding index IDY for each electro-fusion operation performed using the electro-fusion apparatus; a buffer 38; input means 11 for setting at least one of transmission conditions consisting of a preset storage capacity of the buffer 38, a period during which the work data has been collected in the recording unit, and the number of electro-fusion operations; and means for reading the work data stored in the recording unit, including the newest work data and to be transmitted to the host computer, into the buffer 38 in accordance with the transmission condition set by the input means 11, and for transmitting the stored contents of the buffer 38 to the host computer.

The invention according to claim 22 corresponds to the electro-fusion apparatus controller of claim 17, and concerns, as shown in Figures 1 to 12, a host computer for an electro-fusion apparatus in an apparatus for transferring work data concerning electro-fusion joint installation work which is stored in the electro-fusion apparatus to the host computer via communication means after electro-fusion work is completed, the host computer comprising: a data base for storing work data together with a corresponding index IDX for each electro-fusion operation performed using the electro-fusion apparatus; and means for matching indexes IDY received from the electro-fusion apparatus against the indexes IDX read from the data base, designating from among the received indexes IDY a new index IDYi that does not match any one of the indexes IDX read from the data base, and transmitting the designated index IDYi to the electro-fusion apparatus, and for receiving the work data associated with the designated index IDYi from the electro-fusion apparatus, and storing the received work data in the data base.

The invention according to claim 23 corresponds to the electro-fusion apparatus controller of claim 18, and concerns, as shown in Figures 13 to 15, a host computer for an electro-fusion apparatus in an apparatus for transferring work data concerning electro-fusion joint installation work which is stored in the electro-fusion apparatus to the host computer via communication means after electro-fusion work is completed, the host computer comprising: a data base for storing work data together with a corresponding index IDX for each electro-fusion operation performed using the electro-fusion apparatus; transmitting means for reading the indexes IDX from the data base and transmitting the same to the electro-fusion apparatus; and means for storing in the data base a designated index IDYi that is received from the electro-fusion apparatus, and that does not match any one of the indexes IDX read from the data base, together with the work data associated with the designated index IDYi and received from the electro-fusion apparatus.

The invention according to claim 24 corresponds to the electro-fusion apparatus controller of claim 19, and concerns, as shown in Figures 16 to 19, a host computer for an electro-fusion apparatus in an apparatus for transferring work data concerning electro-fusion joint installation work which is stored in the electro-fusion apparatus to the host computer via communication means after electro-fusion work is completed, the host computer comprising: a data base for storing work data together with a corresponding index IDX for each electro-fusion operation performed using the electro-fusion apparatus; means for reading the newest index k from the data base and transmitting the same to the electro-fusion apparatus; and means for receiving, from the electro-fusion apparatus, work data having newer indexes (k+1) to L than the newest index k in the host computer, and storing the received work data in the data base.

The invention according to claim 25 corresponds to the electro-fusion apparatus controller of claim 23, and concerns, as shown in Figures 20 to 22, Figures 27 to 29, Figures 30 and 31, and Figures 25 and 26, a host computer for an electro-fusion apparatus in an apparatus for transferring work data concerning electro-fusion joint installation work which is stored in the electro-fusion apparatus to the host computer via communication means after electro-fusion work is completed, the host computer comprising: a data base for storing work data together with a corresponding index IDX for each electro-fusion operation performed using the electro-fusion apparatus; means for transmitting a transmit request signal to the electro-fusion apparatus; and means for receiving from the electro-fusion apparatus an index IDY not yet received at the host computer and the work data associated with the index IDY, and for storing the index IDY and the work data in the data base.

The invention according to claim 26 concerns, as shown in Figures 23 and 24, a host computer for an electro-fusion apparatus in an apparatus for transferring work data concerning electro-fusion joint installation work which is stored in the electro-fusion apparatus to the host computer via communication means after electro-fusion work is completed, the host computer comprising: a data base for storing work data together with a corresponding index IDX for each electro-fusion operation performed using the electro-fusion apparatus; reordering means 49 for reordering the work data in the data base by ID of the electro-fusion apparatus and storing the reordered work data in the data base; and means for matching indexes IDY received from the electro-fusion apparatus against the indexes IDX read from the data base, designating from among the received indexes IDY a new index IDYi that does not match any one of the indexes IDX read from the data base, and transmitting the designated index IDYi to the electro-fusion apparatus, and for receiving the work data associated with the designated index IDYi from the electro-fusion apparatus, and storing the received work data in the data base.

The invention according to claim 27 concerns a recording medium having a computer program stored thereon for operating any one of the electro-fusion apparatus controllers described above.

The invention according to claim 28 concerns a recording medium having a computer program stored thereon for operating any one of the electro-fusion apparatus host computers described above.

According to the invention, the recording medium can be mounted in the electro-fusion apparatus controller to perform computational operations using a processing circuit implemented by a microcomputer or the like in the electro-fusion apparatus controller. Likewise, the recording medium can be mounted in the electro-fusion apparatus host computer to perform computational operations using a processing circuit implemented by a microcomputer or the like. These recording media may be magnetic recording media such as floppy disks, optical recording media such as CD-ROMs (Compact Disk - Read Only Memory), or other types of recording media; furthermore, these recording media may be mounted in the electro-fusion apparatus controller or the electro-fusion apparatus host computer in a detachable manner or in a not easily removable manner.

The invention according to claim 29 concerns a data transfer apparatus that can be applied not only to electro-fusion apparatuses, but can also be applied extensively to other technical fields, and provides a data transfer apparatus for transferring data sets, one for each of a plurality of groups, from a controller to a host computer, each data set comprising a combination of a plurality of data elements and an identification index for identifying the data set, wherein the controller or the host computer includes: means for discriminating data sets already transferred from the controller to the host computer from data sets not yet transferred; and means for transferring only the not-yet-transferred data discriminated by the discriminating means from the controller to the host computer.

The discriminating means according the invention of claim 30 discriminates each data set by transmitting and receiving the identification index between the controller and the host computer.

The discriminating means according the invention of claim 31 is provided in the controller, and discriminates each data set to determine whether or not the data set has been transferred to the host computer.

### Brief Description of Drawings

Figure 1 is a block diagram showing a first embodiment of a data transfer apparatus according to the present invention;
Figure 2 is a diagram showing the operating states of an electro-fusion apparatus 1 and a host computer 4 according to the present invention;
Figure 3 is a diagram showing in simplified form the operation of an electro-fusion apparatus controller 52 according to the present invention when transferring work data obtained for each of electro-fusion operations to the host computer 4;
Figure 4 is a diagram showing the format of the work data obtained for each of electro-fusion operations according to the present invention;
Figure 5 is a diagram showing the data recorded in a control unit 6 in the electro-fusion apparatus 1;
Figure 6 is a diagram showing in simplified form the operation of data transfer between the controller 52 of the electro-fusion apparatus 1 and the host computer 4;
Figure 7 is a flow chart for explaining the data transfer operation performed by a control means 15 in the host computer 4;
Figure 8 is a flow chart for explaining the data transfer operation performed by the controller 52 of the electro-fusion apparatus 1;
Figure 9 is a flowchart for explaining the operation of the control unit 6 in the controller 52 of the electro-fusion apparatus 1 during electro-fusion work;
Figure 10 is a diagram showing in simplified form the operation and configuration of a second embodiment of the present invention;
Figure 11 is a diagram for explaining the operation and configuration of a third embodiment of the present invention;
Figure 12 is a flow chart for explaining the operation of the control means 15 of the host computer 4 according to the third embodiment shown in Figure 11;
Figure 13 is a block diagram showing a fourth embodiment of the data transfer apparatus;
Figure 14 is a flow chart for explaining the data transfer operation performed by a control means 29 in the host computer 4 according to the fourth embodiment shown in Figure 13;
Figure 15 is a flow chart for explaining the date transfer operation performed by the control unit 6 provided in the controller 52 of the electro-fusion apparatus 1 according to the fourth embodiment shown in Figures 13 and 14;
Figure 16 is a block diagram showing a fifth embodiment of the data transfer apparatus according to the present invention;
Figure 17 is a diagram showing the data stored in a storage unit 24 and a recording unit 9 according to the fifth embodiment shown in Figure 16;
Figure 18 is a flow chart for explaining the operation of a control means 32 according to the fifth embodiment shown in Figures 16 and 17;
Figure 19 is a flow chart for explaining the operation of the control unit 31 provided in the controller 52 according to the fifth embodiment shown in Figures 16 to 18;
Figure 20 is a diagram showing the stored contents of the recording unit 9 provided in the controller 52 of the electro-fusion apparatus 1 according to a sixth embodiment of the present invention;
Figure 21 is a flow chart for explaining the operation of the control means 32 of the host computer 4 according to the sixth embodiment shown in Figure 22;
Figure 22 is a flow chart for explaining the operation of the control unit 31 provided in the controller 52 of the electro-fusion apparatus 1 according to the sixth embodiment shown in Figures 20 and 21;
Figure 23 is a block diagram showing the entire configuration of a seventh embodiment according to the present invention;
Figure 24 is a flow chart for explaining the operation of the control means 36 of the host computer 4 according to the seventh embodiment shown in Figure 23;
Figure 25 is a block diagram showing in simplified form the configuration of an eighth embodiment according to the present invention;
Figure 26 is a flow chart for explaining the operation of the control unit 6 in the controller 52 of the electro-fusion apparatus 1 according to the eighth embodiment shown in Figure 25;
Figure 27 is a block diagram showing the entire configuration of a 10th embodiment according to the present invention;
Figure 28 is a flow chart for explaining the operation of the control means 32 of the host computer 4 according to the 10th embodiment shown in Figure 27;
Figure 29 is a flow chart for explaining the operation of the control unit 31 provided in the controller 52 of the electro-fusion apparatus 1 according to the 10th embodiment shown in Figures 27 to 28;
Figure 30 is a diagram showing the stored contents of the recording unit 9 and the storage unit 24 according to an 11th embodiment of the present invention; and
Figure 31 is a flow chart for explaining the operation of the control unit 31 provided in the controller 52 of the electro-fusion apparatus 1 according to the 11th embodiment shown in Figure 30.

### Best Mode for Carrying out the Invention

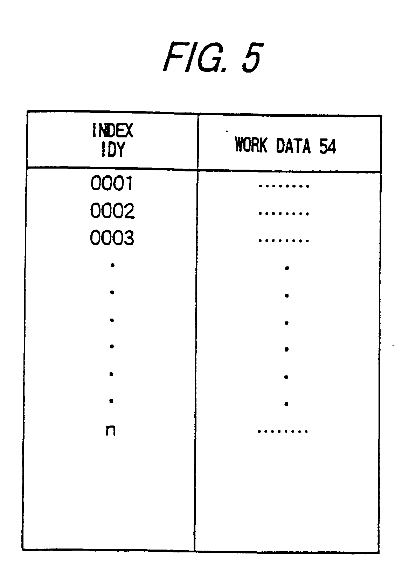

A first embodiment of the present invention will be described with reference to Figures 1 to 9. In Figure 1, an electro-fusion apparatus 1 used to join resin pipes 2 with an electro-fusion joint 3 by electro-fusion consists basically of the electro-fusion joint 3 and an electro-fusion apparatus controller 52. The controller 52 is connected to a host computer 4 via a cable 13. The controller 52 of the electro-fusion apparatus 1 includes a control unit 6 which comprises a processing circuit such as a microprocessor, a power supply unit 7 which comprises a voltage transformer or the like and supplies a fusing current to the joint 3, a bar code reader 8 which reads a bar code 41 attached to the joint 3, a temperature sensor 42 which measures the outside temperature at the time of electro-fusion work, a recording unit 9 which comprises a random access memory for recording work data, such as joint information, construction information, apparatus information, and electro-fusion data, by assigning an electro-fusion number as an index to each work data set as shown in Figure 5, an input unit 11 such as a keyboard, mouse, etc. for inputting instructions and various kinds of information, and a display unit 12 which comprises a display such as a cathode ray tube or a liquid crystal display for displaying various kinds of information. The power supply unit 7, based on a control signal from the control unit 6, converts an externally supplied electric current into a desired current/voltage, and supplies it to the electro-fusion joint 3. The electro-fusion joint 3 acts to hold the resin pipes 2 in concentric relation to each other with their ends partially inserted in a joint pipe 46, and has a mechanical configuration such as a heating coil 47. Here, the resin pipes 2, designated by reference numerals 2a and 2b in the figure, are collectively indicated by reference numeral 2.

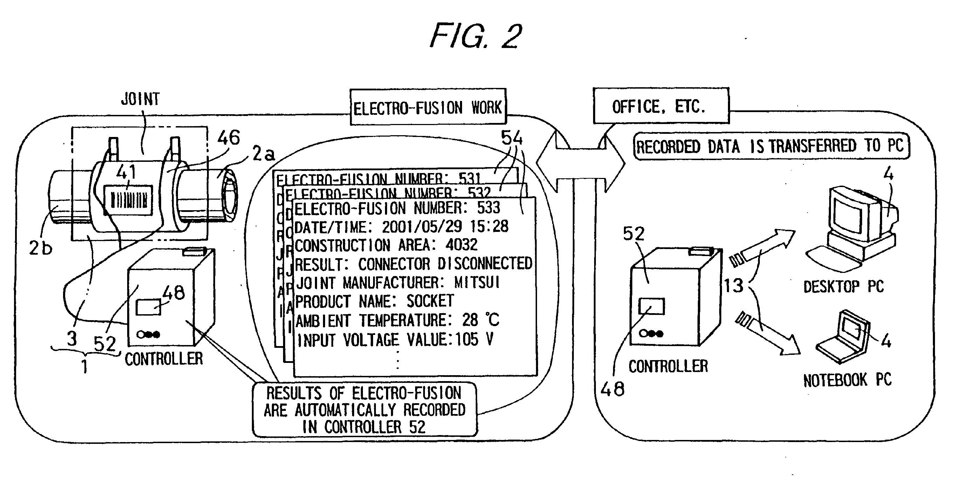

Figure 2 is a diagram showing the operating states of the electro-fusion apparatus 1 and the host computer 4 according to the present invention. During electro-fusion work for joining the resin pipes 2, work data is stored in the recording unit 9 provided in the controller 52 of the electro-fusion apparatus 1. In Figure 2, work data for each electro-fusion operation is indicated by reference numeral 54. After the electro-fusion work is completed, the controller 52 is carried from the construction site back to the office, etc. where the controller 52 is connected to the host computer 4 via the cable 13 and the data stored in the controller 52 is transferred to the host computer 4. The present invention aims to shorten the time required to transfer the data from the controller 52 to the host computer 4.

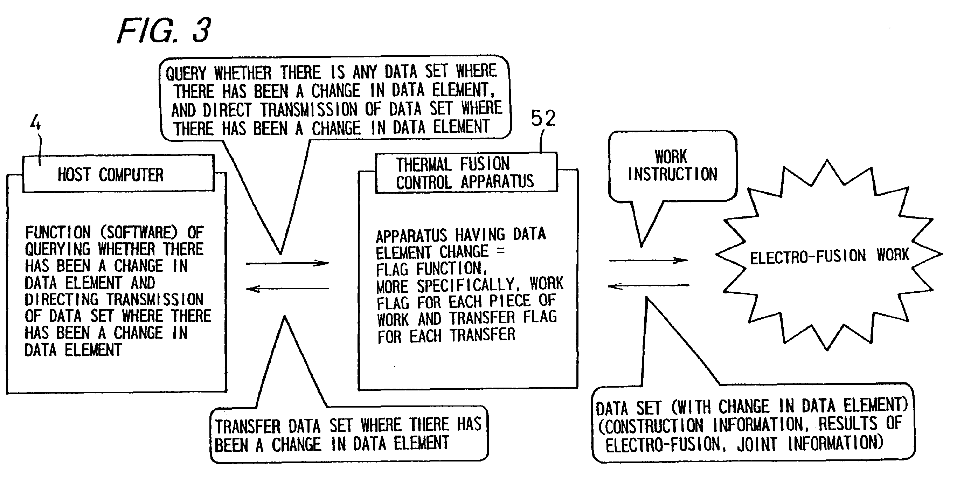

Figure 3 is a diagram showing in simplified form the operation of the controller 52 of the electro-fusion apparatus according to the present invention when transferring the work data obtained for each of electro-fusion operations to the host computer 4. Based on such information as the joint information carried in the bar code 41 attached to the joint pipe 46 and read by the bar code reader 8, the outside temperature detected by the temperature sensor 42, and the construction information entered by operating the input unit 11, the control unit 6 in the controller 52 sets electro-fusion conditions such as voltage, heating time, current, power, and electrical energy, and electrically energizes the electric heater 47.

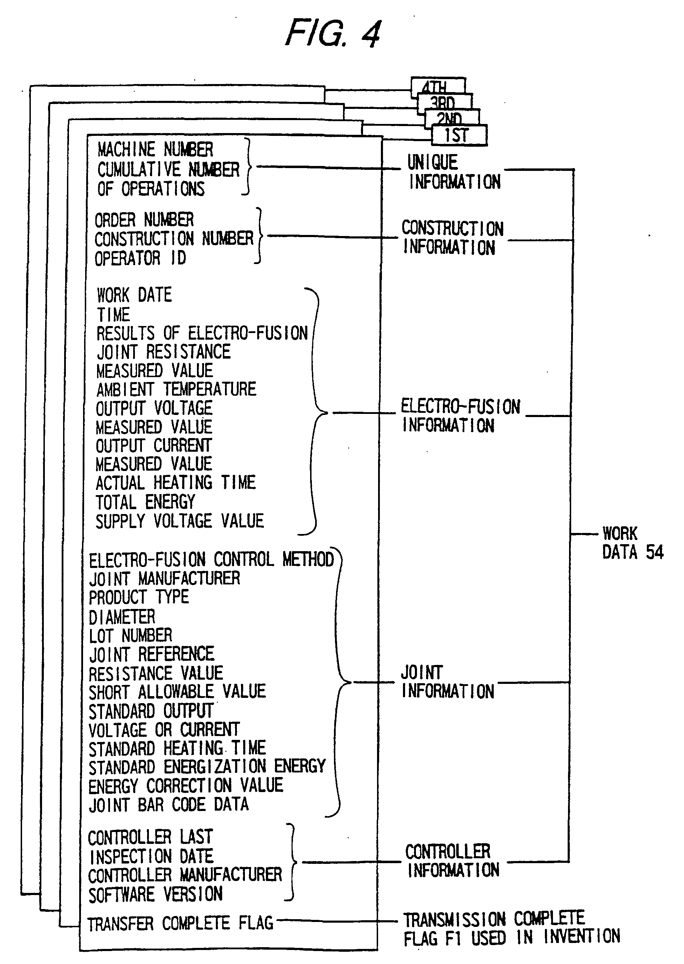

Figure 4 is a diagram showing the format of the work data obtained for each of electro-fusion operations according to the present invention. The present invention further uses a transmission complete flag F1 in embodiments to be described later. The work data includes joint information concerning the electro-fusion joint used, construction information concerning the work done using the electro-fusion joint, apparatus information concerning the electro-fusion apparatus used, and electro-fusion data. The joint information is carried in the bar code 41 attached to the electro-fusion joint, and can be read using the reader 8. The joint information includes information such as the name of the manufacturer of the joint and the type, size, and lot number of the joint, and information concerning the electric heater 47 such as a heating coil provided in the joint pipe 46, i.e., information such as standard application voltage, standard heating time, and correction coefficients for the outside temperature.

The construction information includes information entered by an operator by operating the input unit 11, such as information concerning pipe arrangement drawing and construction drawing for pipe installation work, and information such as order number, installation site, work number, work date, and electro-fusion number.

The apparatus information includes the name of the manufacturer of the electro-fusion apparatus, the production number, and the inspection/test date. The production number is the serial number, or the machine number, of the electro-fusion apparatus 1. The electro-fusion number, which indicates the cumulative number of electro-fusion operations, forms an index as unique information together with the serial number of the electro-fusion apparatus 1. With this index, the work data such as electro-fusion number when electro-fusion work is performed using the controller 52 of the electro-fusion apparatus 1 having a particular serial number forms a unique data set for all electro-fusion work.

The electro-fusion data includes the highest and lowest values of the voltage applied during the electro-fusion operation, heating time and electrical energy, the outside temperature detected by the temperature sensor 42, and a fault description if a fault such as abrupt power off occurred. The voltage, heating time, current, power, electrical energy, etc. are detected during the electro-fusion work by detection means provided in the controller 52, and the detected values are supplied to the control unit 6 and stored in the recording unit 9 for each electro-fusion operation.

The bar code reader 8 reads the joint information concerning the electro-fusion joint 3, such as the name of the manufacturer, the type of the joint, etc., from the bar code 41 attached to the joint pipe 46, and supplies the information to the control unit 6. The temperature sensor 42 detects the measured outside temperature and supplies it to the control unit 6. The joint information and the outside temperature are recorded in the recording unit 9.

The construction information, such as pipe arrangement drawing, order number of the work carried out, etc., and the apparatus information concerning the electro-fusion apparatus are input from the input unit 11 into the control unit 6, and recorded in the recording unit 9 for storage therein. Of the items of the construction information, the work date and time can be automatically input if a clock means 43 having a calendar function is provided in the control unit 6. If a bar code 45 is attached to the pipe arrangement drawing or construction drawing 44, the order number and work number can be recorded in the recording unit 9 by reading the bar code 45 with the bar code reader 8. The apparatus information is prestored in the recording unit 9 in the electro-fusion apparatus 1, but alternatively, a bar code 48 may be attached to the electro-fusion apparatus 1, and the apparatus information may be recorded in the recording unit 9 by reading it with the bar code reader 8.

The display unit 12, based on the output from the control unit 6, displays the joint information, construction information, apparatus information, and the various kinds of electro-fusion data obtained during the electro-fusion operation.

The control unit 6 computes the electro-fusion conditions based on the various kinds of information recorded in the recording unit 9, the outside temperature detected by the temperature sensor 42, etc. and, by controlling the power supply unit 7 based on the results of the computations, applies the necessary electrical energy to the joint 3 to join the resin pipes 2 with the joint 3 by electro-fusion.

The ends of the resin pipes 2, to be thermally fused, are inserted in the joint pipe 46 of the joint 3. The joint 3 is constructed by embedding the electric heater 47, for example, a heating coil, in the joint pipe 46. The resin pipes 2 and the joint pipe 46 are made of synthetic resin such as thermoplastic resin, for example, polyethylene. With the power supplied from the power supply unit 7 to the electric heater 47, the ends of the resin pipes 2 and the joint pipe 46 are thermally fused and joined together.

In addition to the function of controlling the above electro-fusion operation, the control unit 6 has the function of transferring the work data recorded in the recording unit 9 to the host computer 4. That is, each time the work using the electro-fusion joint is done as shown in Figure 5, the recording unit 9 records the various kinds of work data 54 described above and assigns the electro-fusion number as its index IDY in the order of work, and when requested from the host computer 4, the work data 54 recorded in the recording unit 9 is transferred to the host computer 4. The plurality of combinations of index IDY and work data 54 shown in Figure 5 are stored in the recording unit 9 for each ID number which is the identification number identifying the controller 52 of the electro-fusion apparatus 1. Figure 5 shows the index/work data combinations associated with the ID of one particular electro-fusion apparatus 1; the contents such as shown in Figure 5 are stored in the recording unit 9 for each or a plurality of electro-fusion apparatuses 1. The ID may be a symbol or letters identical to the serial number of the electro-fusion apparatus 1, and especially the controller 52, among others. The index IDY in Figure 5 only shows the electro-fusion number.

In the illustrated example, the data transfer between the electro-fusion apparatus 1 and the host computer 4 is performed using the cable 13, but alternatively, it may be performed using an infrared optical communication link, a telephone line, or a wireless communication line.

The host computer 4 includes a control means 15 which comprises a microprocessor or the like, a data base 16 which comprises a random access memory for storing the work data transferred from the electro-fusion apparatus 1, an input means 17 such as a keyboard, mouse, etc. for inputting instructions and various kinds of information, and a display means 18 which comprises a display such as a CRT or a liquid crystal panel. The control means 15 includes a transmitting and receiving unit 21, a management unit 22, a search unit 23, a storage unit 24, and a matching unit 25. Of these units, the management unit 22 has the function of requesting the electro-fusion apparatus 1 for transmission of its ID, i.e., the serial number or the code number of the controller 52 of the apparatus 1, through the transmitting and receiving unit 21 in accordance with an instruction entered from the input means 17, and also the function of requesting the electro-fusion apparatus 1 for transmission of the index, i.e., the electro-fusion number recorded in the recording unit 9, together with the work data associated with the index.

The search unit 23 has the function of searching the data base 16 based on the ID of the controller 52 of the electro-fusion apparatus 1 (hereinafter sometimes referred to as the ID of the electro-fusion apparatus 1) received from the apparatus 1, and retrieving the work data having that ID as the key, that is, the work data associated with the ID. The storage unit 24 has the function of storing the retrieved index IDX and the work data associated with the index IDX. Index IDX/work data combinations associated with the ID of the electro-fusion apparatus 1 are stored in the data base 16, as in the previously described recording unit 9. The contents of the data base 16 are stored for each ID, just as the contents shown in Figure 5 are stored.

The matching unit 25 has the function of matching the indexes IDY of the work data stored in the recording unit 9 in the electro-fusion apparatus 1 against the indexes IDX of the work data stored in the storage unit 24 and, if the indexes IDY transmitted from the recording unit 9 contains a new index IDYi of data that is not stored in the storage unit 24, then transferring the new index IDYi, i.e., the electro-fusion number, to the management unit 22. The management unit 22 has the further function of temporarily storing the thus transferred new index IDYi, i.e., the electro-fusion number, and when the matching of all the indexes is completed, requesting the electro-fusion apparatus 1 to transmit the work data associated with each electro-fusion number transferred to the management unit 22.

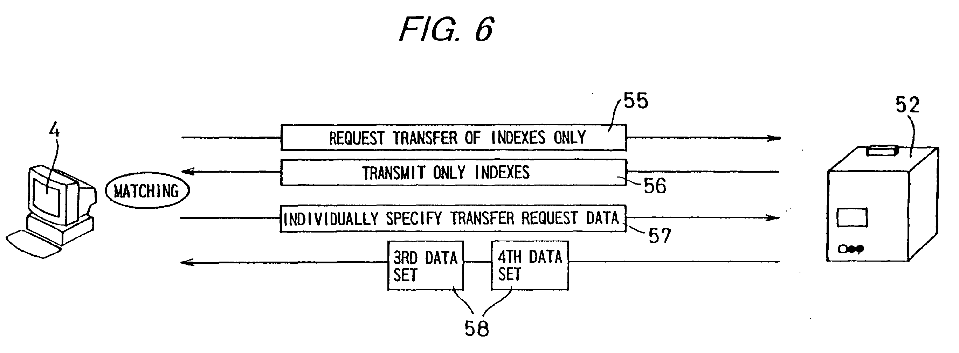

Figure 6 is a diagram showing in simplified form the operation of data transfer between the controller 52 of the electro-fusion apparatus 1 and the host computer 4. First, the host computer 4 sends a transfer request 55 requesting the controller 52 to transfer all and only the indexes IDY stored in the recording unit 9. In response, the control unit 6 in the controller 52 performs an operation 56 to transmit all and only the indexes IDY stored in the recording unit 9 to the host computer 4. Then, the matching unit 25 in the host computer 4 examines the indexes IDY received from the controller 52, as previously described, to determine whether they contain a new index IDYi that does not match any one of the indexes IDX stored in the host computer 4. The management unit 22 in the host computer 4 performs an operation 57 to transmit a signal indicating the new index IDYi to the controller 52, thereby individually specifying the index and requesting the controller 52 to transmit not-yet-transmitted work data together with its index to the host computer 4. In response, the cant roller 52 transmits the individually specified new index IDYi and the work data associated with the new index IDYi to the host computer 4, as shown by reference numeral 58. In this way, in the operations 55, 56, and 57, only signals concerning the indexes, not the body of the work data, are transmitted and received, and in the data transfer operation indicated by reference numeral 58, only the specified data is transmitted and received, so that the transfer time can be reduced.

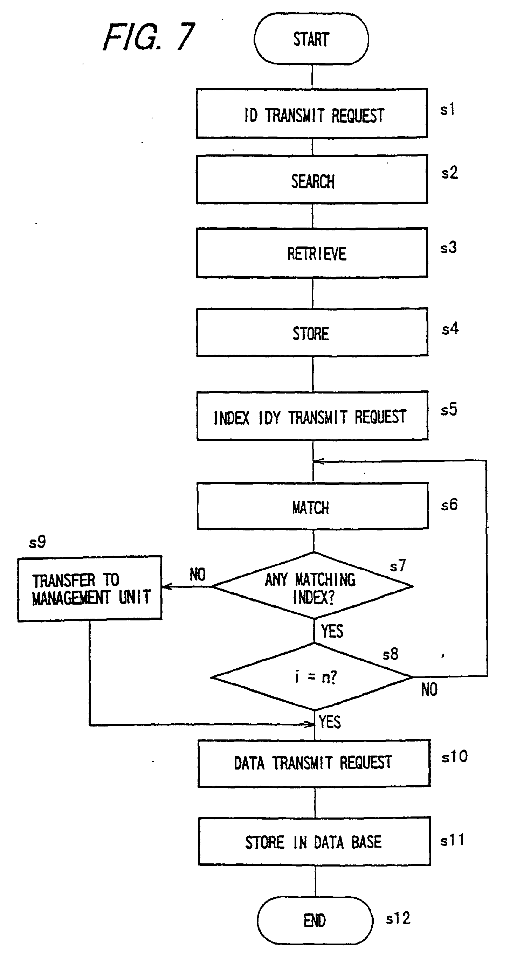

Figure 7 shows the processing flow of the control means 15 described above; at the start of the transfer process, first the management unit 22 requests the electro-fusion apparatus 1 to transmit the ID of the apparatus 1 (S1). When the ID is transmitted from the electro-fusion apparatus 1, the search unit 23 searches the data base 16 (S2), and retrieves from the data base 16 data consisting of combinations of the indexes IDX with the ID as the key and the work data associated with the prespective indexes IDX (S3). The retrieved data is stored in the storage unit 24 (S4).

Next, the management unit 22 requests the electro-fusion apparatus 1 to transmit the indexes, that is, the electro-fusion numbers of the work data recorded in the recording unit 9 such as shown in Figure 2 (S5), and the matching unit 25 matches the list of the indexes IDY received from the electro-fusion apparatus 1 against the list of the indexes IDX of the data stored in the storage unit 24 (S6). This matching operation is performed on each of the indexes IDY received from the electro-fusion apparatus 1, to determine whether there is a matching one in the indexes IDX stored in the storage unit 24 (S7). If the index IDY matches any one of the indexes IDX, the matching operation is repeated for the next electro-fusion number. This matching operation is repeated until the electro-fusion number i of the index IDY is counted up and reaches the newest electro-fusion number n of the IDY (S8). In step S7, if, of the indexes IDY received from the apparatus 1, there is an index IDYi that does not match any of the indexes IDX stored in the storage unit 24 (S7), that new index IDYi is transferred to the management unit 22 (S9).

The electro-fusion number is counted up by +1 for each matching operation, and when the electro-fusion number reaches n, the management unit 22 requests the electro-fusion apparatus 1 to transmit the work data corresponding to the electro-fusion number of the new index IDYi transferred from the matching unit 25 to the management unit 22 (S10). The work data received from the apparatus 1 is stored in the data base 16 (S11).

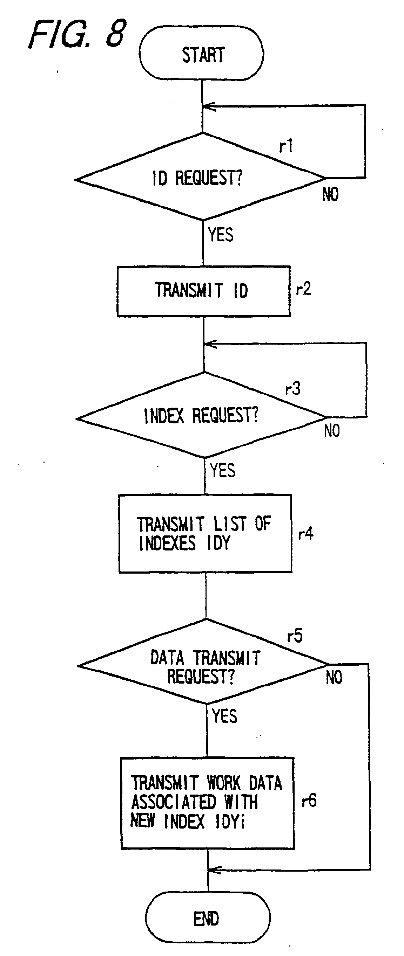

Figure 8 is a flow chart for explaining the operation of the control unit 6 in the electro-fusion apparatus 1. When the reception of the ID transmit request signal requesting the transmission of the ID identifying the apparatus 1 to the host computer 4 is detected in step r1, the control unit 6 transmits the ID in step r2. The ID request signal is transmitted from the host computer 4 in step s1 in Figure 7 described above.

In step r3, it is determined whether the index IDY transmit request signal is received from the host computer 4. When the index transmit request signal is received, then in step r4 a list of the indexes IDY stored in the recording unit 9 is transmitted. At this time, the work data associated with the respective indexes IDY are not transmitted. The index transmit request in step r3 is transmitted from the host computer 4 in step s5 in Figure 7 described above.

When the reception of the new index IDYi requesting the transmission of its associated work data to the host computer 4 is detected in step r5, the new index IDYi and the work data associated with the index IDYi are read from the recording unit 9 and transmitted to the host computer 4 in the next step r6. The work data transmit request with the new index IDYi in step r5 is transmitted in step s10 in Figure 7 described above.

According to the present embodiment, in steps S6 to S9 of Figure 7, each individual index IDY of work data recorded in the recording unit 9 in the electro-fusion apparatus 1 is matched against the set of indexes IDX of work data stored in the data base 16 in the host computer 4 in association with the electro-fusion apparatus 1. Consequently, data containing the index IDYi recorded in the electro-fusion apparatus 1 but not stored in the data base 16 and the work data associated with the index IDYi, are all transferred, including previously overlooked data. The transfer is limited only to the index IDYi not yet stored in the data base 16 and the work data associated with the index IDYi. According to the present invention, the time required to transfer data is greatly reduced compared with the prior art method that requires all the work data recorded in the electro-fusion apparatus 1 be transferred each time. Generally, the number of data sets recorded in one electro-fusion apparatus 1 is 1000 to 2000, while the number of work data sets per day is, on the average, 10 to 30 per apparatus; therefore, if data is to be transferred once every day or once every week, the amount of data to be transferred and the time required to transfer the data are greatly reduced compared with the case where all the work data sets recorded in the electro-fusion apparatus 1 are transferred each time.

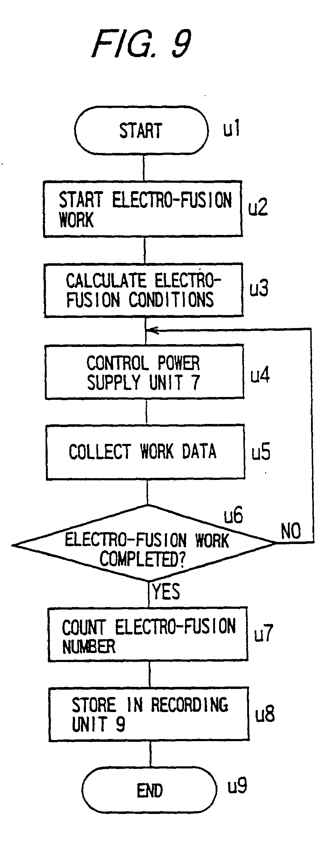

Figure 9 is a flow chart for explaining the electro-fusion operation of the control unit 6 in the controller 52 of the electro-fusion apparatus 1. The process proceeds from step u1 to step u2 to start the work to join the resin pipes 2 with the joint pipe 46 by electro-fusion, and in step u3, electro-fusion conditions are computed. Here, the electro-fusion conditions are computed, as previously described, based on the joint information read by the bar code reader 8 from the bar code 41 attached to the joint pipe 46, the outside temperature detected by the temperature sensor 42, etc. and further on the construction information and other information entered by the operator using the input unit 11. The control unit 6, based on the thus computed electro-fusion conditions, controls the power supply unit 7 in step u4, and supplies power to the electric heater 47. The above electro-fusion conditions include the voltage, heating time, current, power, electrical energy, etc. The control unit 6 collects work data during the electro-fusion operation by detecting various pieces of data using the temperature sensor 42 and other sensors. When it is determined in step u6 that the electro-fusion work is completed, then in step u7 the cumulative number of electro-fusion operations, i.e., the electro-fusion number, is incremented by +1, thus determining the electro-fusion number. In step u8, the work data is stored in the recording unit 9 in association with the electro-fusion number, and the electro-fusion work process is thus terminated in step u9.

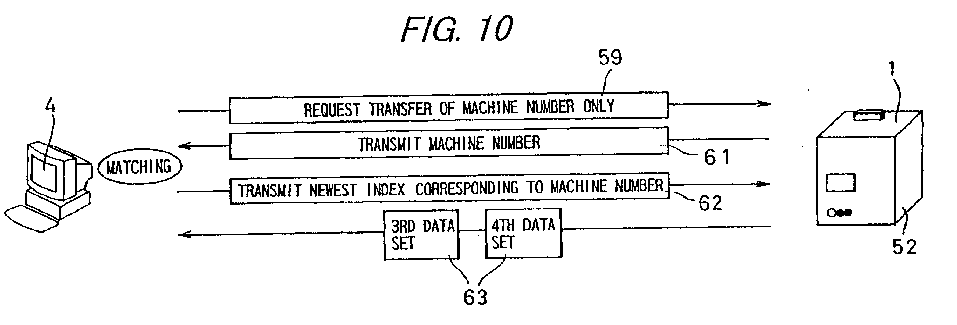

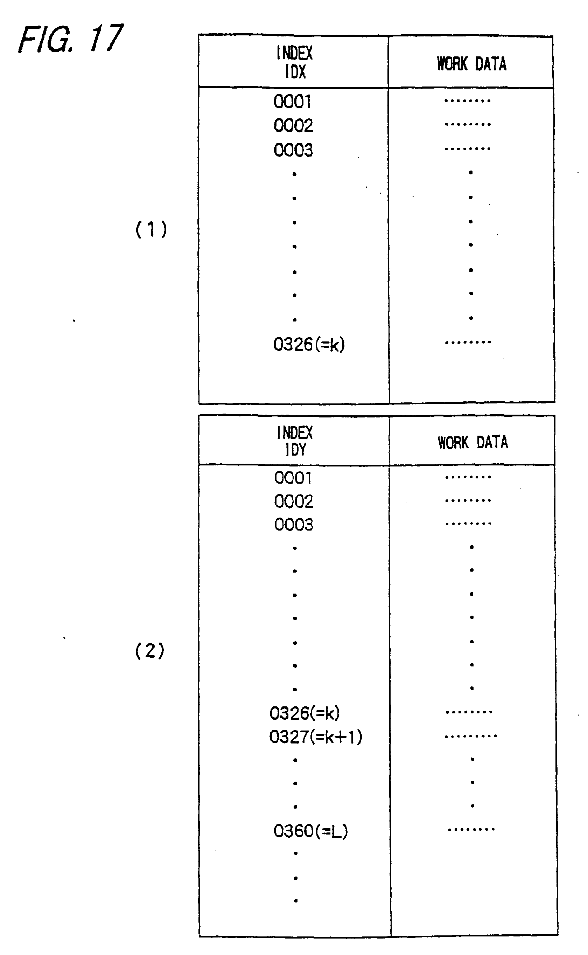

Figure 10 is a diagram showing in simplified form the operation and configuration of a second embodiment of the present invention. The configuration of the second embodiment shown in Figure 10 is similar to that of the embodiment illustrated with reference to Figures 1 to 9, and the corresponding parts are designated by the same reference numerals. When transferring data from the controller 52 of the electro-fusion apparatus 1, a transfer request signal, requesting the controller 52 to transfer only the machine number as the index to the host computer 4, is output from the controller 4 in operation 59. In response to the transfer request signal, the controller 52 transmits the machine number unique to the controller 52 to the host computer 4 in operation 61. Then, in operation 62, the host computer 4 transmits to the controller 52 the newest index k of the indexes IDY stored in the recording unit 9 in association with the index which is the machine number transmitted in operation 61. The controller 52 receives the newest index k from the host computer 4 and, in operation 63, transmits data containing the next index (k+1) and any subsequent indexes and their associated work data. The second embodiment shown in Figure 10 is similar to a fifth embodiment which will be described later with reference to Figures 17 to 19.

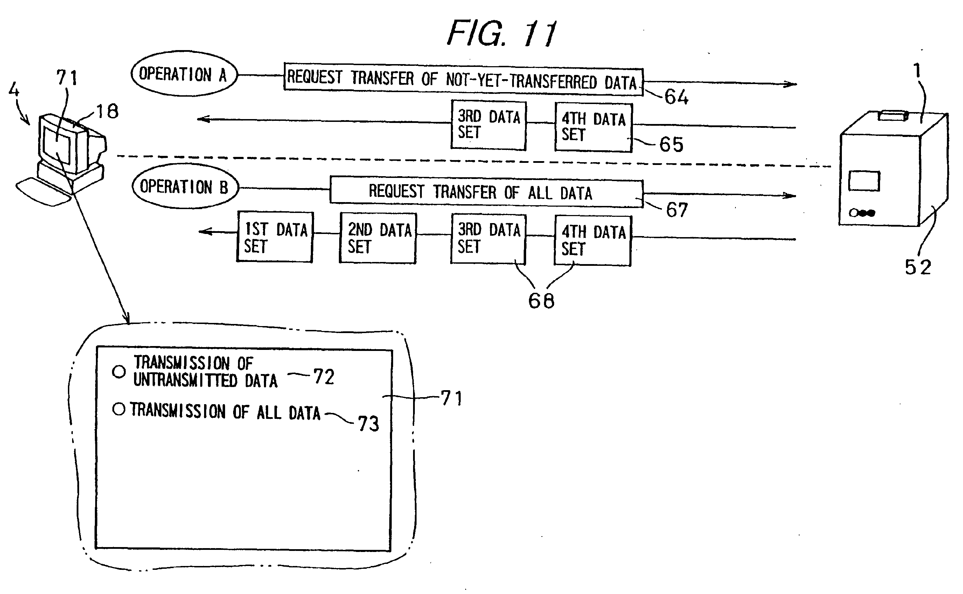

Figure 11 is a diagram showing for explaining the operation and configuration of a third embodiment of the present invention. The configuration of the third embodiment shown in Figure 11 is similar to that of the embodiments illustrated with reference to Figures 1 to 10, and the corresponding parts are designated by the same reference numerals.

When all or part of the data stored in the data base 16 in the host computer 4 is lost due, for example, to an erroneous operation by an operator, or when there arises a need to construct a new data because the host computer 4 is, for example, replaced by a new one, all of the already transmitted data and not yet transmitted data recorded in the recording unit 9 in the electro-fusion apparatus 1 will have to be transmitted to the host computer 4. In the third embodiment, when a transmit operation is performed using the input means 17 of the host computer 4 shown in Figure 1, a menu showing a "transmission of all data" display area 72 and a "transmission of untransmitted data" display area 73, such as shown in Figure 11, is displayed on the screen 71 of the display unit 12. When the "transmission of all data" display area 73 is clicked, an all data transfer mode is carried out in which all the data stored in the recording unit 9 are transmitted to the host computer 4 together with the indexes IDY as their electro-fusion numbers. When the "transmission of untransmitted data" display area 72 is clicked, a new data transfer mode is carried out in which, of the data stored in the recording unit 9, untransmitted work data and the index IDY as its electro-fusion number are transmitted to the host computer 4.

The host computer 4 performs a transfer request operation 64 requesting the controller 52 to transfer not yet transferred data to the host computer 4. This transfer request operation 64 corresponds to the operations 55 to 57 in Figure 6 and the operations 59 to 62 in Figure 10. Data 65 is thus transferred from the controller 52. In this way, since only the data not yet stored in the data base 11 of the host computer 4 is transferred from the controller 52, the transfer time can be reduced. In the all data transfer mode, as opposed to the above new data transfer mode, the host computer 4 performs an operation 67 by sending an all data transfer request signal to the controller 52. In response to that, data 68 consisting of combinations of all the indexes IDY stored in the recording unit 9 and the work data associated with the respective indexes IDY are transferred from the controller 52 to the host computer 4.

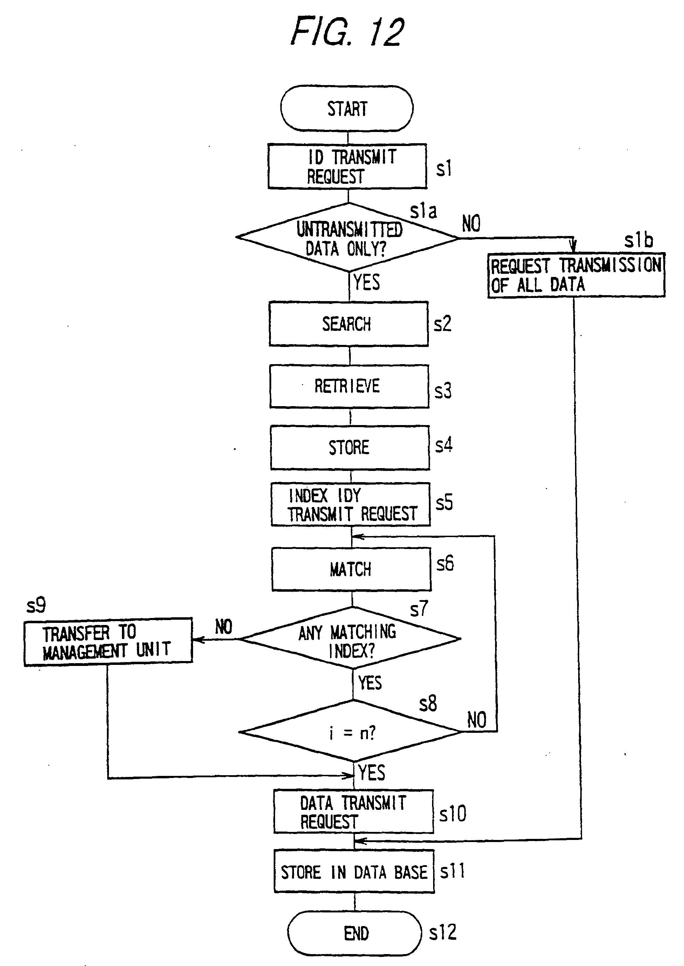

Figure 12 is a flow chart for explaining the operation of the control means 15 of the host computer 4 according to the third embodiment shown in Figure 11. The operation of Figure 12 is similar to the operation of the first embodiment shown in Figure 7, and the corresponding parts are designated by the same reference numerals. What should be noted in this embodiment is that the transfer mode can be selected between the new data transfer mode and the all data transfer mode by operating the input means 17 of the host computer 4. The control means 15, in response to the output of the input means 17, determines in step s1a whether the selected mode is (a) the new data transfer mode in which only the not yet transferred data is transferred from the controller 52 to the host computer 4 or (b) the all data transfer mode in which all the data stored in the recording unit 9 are transferred from the controller 52 to the host computer 4. If the all data transfer mode for transmission of all data is specified by the operator operating the input means 17, and if the mode is the new data transfer mode, the process proceeds from step s1a to step s2. If the mode is not the all data transfer mode, it is determined whether the new data transfer mode for transmission of only the not yet transferred data has been specified by the operation of the input means 17. If the mode is the all data transfer mode, the process proceeds from step s1a to step s1b, and a request is sent out, requesting the transmission to the host computer 4 of all the stored contents of the recording unit 9, that is, all the indexes IDY and the work data associated with the respective indexes IDY, thus accomplishing the operation 67 in Figure 11. In this way, all the data stored in the recording unit 9 can be transferred from the controller 52 to the host computer 4 to update or rewrite the stored contents of the storage unit 24 and hence the stored contents of the data base 16, in accordance with its ID. Accordingly, when the operator of the host computer 4 has accidentally erased the stored contents of the data base 16, or when a failure has occurred in the host computer 4, the data base 16 can be restored by transferring all the data from the controller 52, and in this way, the stored contents of the data base 16 can be backed up by the recording unit 9 in the controller 52.

In the third embodiment, the control unit 6, in response to the all data transfer request signal in step s1b in Figure 12, transmits all the data stored in the recording unit 9 to the host computer 4, instead of performing the previously described operation of steps r5 and r6 in Figure 8. Otherwise, the operation is the same as that of the first embodiment illustrated with reference to Figures 1 to 9.

In alternative embodiments of the present invention, the control means 15 may be configured so as to prevent the stored contents of the data base 16 from being rewritten or erased by the operation of the input means 17.

In the fourth embodiment shown in Figure 13, a matching unit 27, which has the function of matching the indexes of work data recorded in the electro-fusion apparatus 1 against the indexes of work data stored in the storage unit 24 in the host computer 4, is provided in the control unit 6 in the electro-fusion apparatus 1. That is, the control unit 6 includes (a) the matching unit 27 having the function of matching the indexes IDY of work data recorded in the recording unit 26 against the indexes IDX of work data transmitted from the host computer 4 and (b) a transmitting and receiving unit 28 which is to be connected to the transmitting and receiving unit 21.

In addition, the control unit 6 has its inherent functions such as shown in Figures 1 to 9, that is, the function of computing the electro-fusion conditions and the function of controlling the power supply unit 7. On the other hand, the control means 29 of the host computer 4 is the same in configuration as the control means 15 shown in Figures 1 to 9, except that the matching unit is omitted.

In the present embodiment, the management unit 22 in the control means 29 transmits the indexes IDX of work data stored in the storage unit 24 to the control unit 6 in the electro-fusion apparatus 1, where the matching unit 27 matches them against the indexes IDY of the work data recorded in the recording unit 26. The matching unit 27 performs the matching operation in the same manner as the matching unit 25 of the first embodiment. If the result of the matching shows that a new index IDYi which does not match any of the indexes transmitted from the host computer 4 is stored in the recording unit 26, the new index IDYi and the work data associated with the new index IDYi are transmitted to the host computer 4.

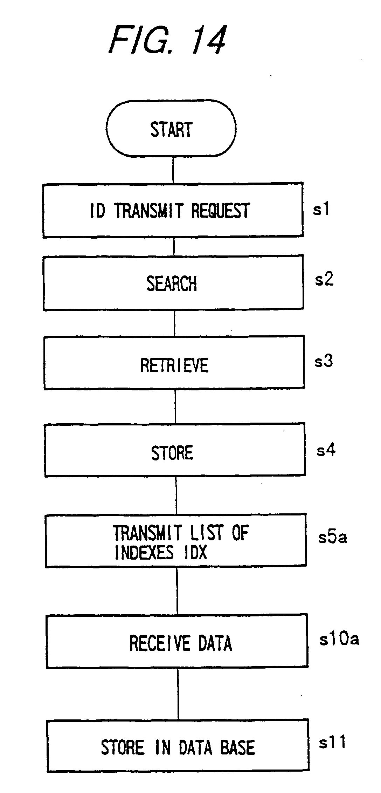

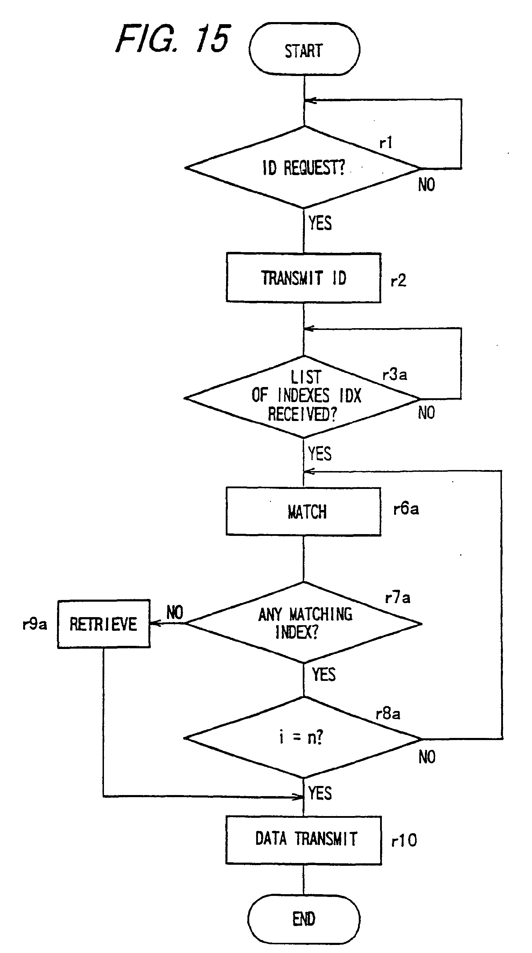

Figure 14 is a flow chart for explaining the operation of the control means 29 according to the fourth embodiment shown in Figure 13, and Figure 15 is a flow chart for explaining the operation of the control unit 6 in the electro-fusion apparatus 1. In Figures 14 and 15, the steps corresponding to those in Figures 7 and 8 are designated by the same reference numerals. In Figure 14, the control unit 29 performs the operations in steps s1 to s4 in the same manner as in the first embodiment. In step s5a, a list of indexes IDX read from the data base 16 corresponding to the electro-fusion apparatus 1 having an ID, and stored in the storage unit 24, is transmitted to the control unit 6 via the transmitting and receiving units 21 and 28. Then, in steps r6a to r9a in Figure 15, the matching unit 27 in the control unit 6 matches the indexes IDY stored in the recording unit 26 against the list of the indexes IDX received from the control means 29. If the result of the matching shows that a new index IDYi is stored in the recording unit 26, the new index IDYi and the work data associated with the new index IDYi are read from the recording unit 9 and transmitted out from the control unit 6, and the transmitted data is received by the control means 29 in step s10a in Figure 14. Then, the new index IDYi and the work data associated with the new index IDYi are stored in the data base 16.

In the operation of the control unit 6, steps r1 and r2 in Figure 15 are the same as the corresponding steps in Figure 8. When the list of the indexes IDX transmitted from the control means 29 in step s5a in Figure 14 is received in step r3a, the matching operation such as described above is performed in the subsequent steps r6a to r9a. These steps r6a to r9a are the same as the steps s6 to s9 in Figure 7.

In step r10, the new index IDYi and its associated work data are transmitted from the control unit 6 to the control means 29. Otherwise, the configuration of the embodiment shown in Figures 13 to 15 is the same as that of the embodiment illustrated with reference to Figures 1 to 9.

In the fifth embodiment shown in Figure 16, the control unit 31 in the electro-fusion apparatus 1 has the same configuration as that of the control unit 6 shown in Figures 1 to 9, while the control means 32 in the host computer 4 has the same configuration as that of the control means 29 shown in Figures 13 to 15. The operation of the control means 32 is similar to that described with reference to Figure 7. The operation of the control unit 31 is similar to that described with reference to Figure 15.

In this embodiment, the management unit 22 assumes that, of the indexes IDX of data shown in Figure 17(1) as stored in the storage unit 24, only the work data associated with the indexes of the electro-fusion numbers 0001 to k (k is, for example, 0326) are already stored in the data base 16 and hence in the storage unit 24.

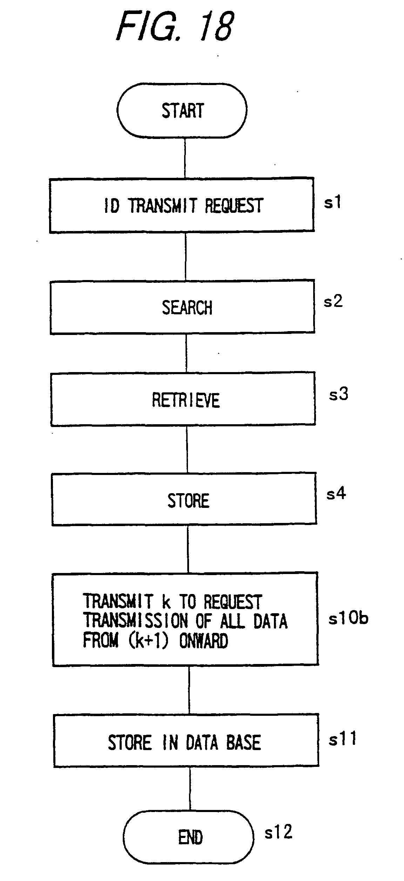

Figure 18 is a flow chart for explaining the operation of the control means 32 of the host computer 4 according to the fifth embodiment shown in Figures 16 and 17. The operation of this control means 32 is similar to that described with reference to Figure 7, but after carrying out the steps s1 to s4, the process proceeds to step s10b where, of the indexes IDX shown in Figure 17(1) as stored in the data base 16 and hence in the storage unit 24, a signal indicating the newest index k is transmitted from the transmitting and receiving unit 21 to the control unit 31 in the controller 52. By transmitting this signal, the host computer 4 requests the controller 52 to transmit all electro-fusion numbers newer than that newest index k, i.e., the next index (k+1) and any subsequent indexes IDY with which new work data are stored, together with the work data associated with the respective indexes IDY. More specifically, in step s10b, the control means 32 sends a transmit request requesting the electro-fusion apparatus 1 to transmit in step s10 all the data assigned newer electro-fusion numbers than k, for example, 0326(=K), that is, the next electro-fusion number 0327 (=k+1) and any subsequent electro-fusion numbers. It is assumed here that the work data associated with the electro-fusion number 0327 (= k+1) and any subsequent electro-fusion numbers are not stored in the data base 16.

It is assumed that the indexes IDY shown in Figure 17(2) and the work data associated with the respective indexes IDY are stored in the recording unit 9. That is, it is assumed, for example, that 360 sets of work data are stored in the recording unit 9, and that the electro-fusion numbers as their indexes are 0001 to 0360 (=L).

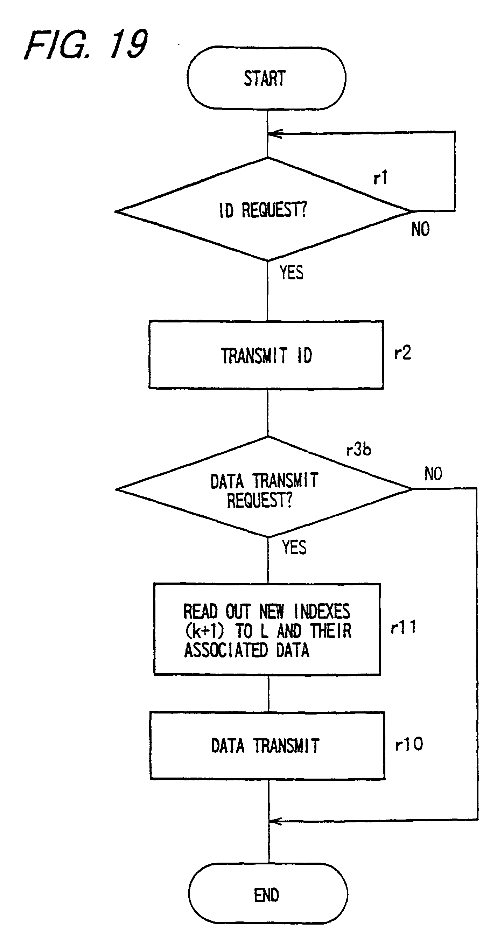

Figure 19 is a flow chart for explaining the operation of the control unit 31 provided in the controller 52 of the electro-fusion apparatus 1 according to the fifth embodiment shown in Figures 16 to 18. The control unit 31 in the electro-fusion apparatus 1, in step r3b in Figure 19, responds to the data transmit request sent out in the above-described step s10b, reads out the indexes (k+1) to L of the new electro-fusion numbers 0327 (k+1) to 0360 (=L) and the work data associated with the respective indexes (k+1) to L from the recording unit 9 in step r11, and transmits them to the host computer 4 in the next step r10.

In a sixth embodiment which is similar in configuration to the embodiment shown in Figure 6, the indexes IDY and the work data associated with the respective indexes IDY are stored in the recording unit 9 in the electro-fusion apparatus 1, together with a transmission complete flag F1 for each index IDY, as shown in Figure 20. In this sixth embodiment, when the transmission of an index IDY, i.e., an electro-fusion number stored in the recording unit 9, and its associated work data has been completed normally, its corresponding transmission complete flag F1 is set. The electro-fusion apparatus 1, in response to the transmit request received from the management unit 22, transmits any electro-fusion number for which the transmission complete flag F1 is not set and its associated work data to the host computer 4.

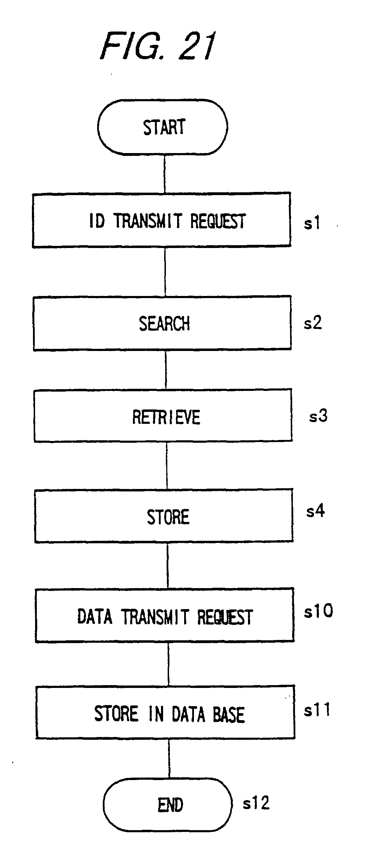

Figure 21 is a flow chart for explaining the operation of the control means 32 of the host computer 4 according to the sixth embodiment. Steps s1 to s4 are the same as the corresponding steps in the foregoing embodiment. In step s10, the control means 32 sends a data transmit request signal requesting the controller 52 to transmit any new index IDY and the work data associated with the new index IDY to the host computer 4. In response, any new index IDY and the work data associated with the new index IDY are transmitted to the host computer 4, and the data received by the host computer 4 are stored in the data base 16 in step s11.

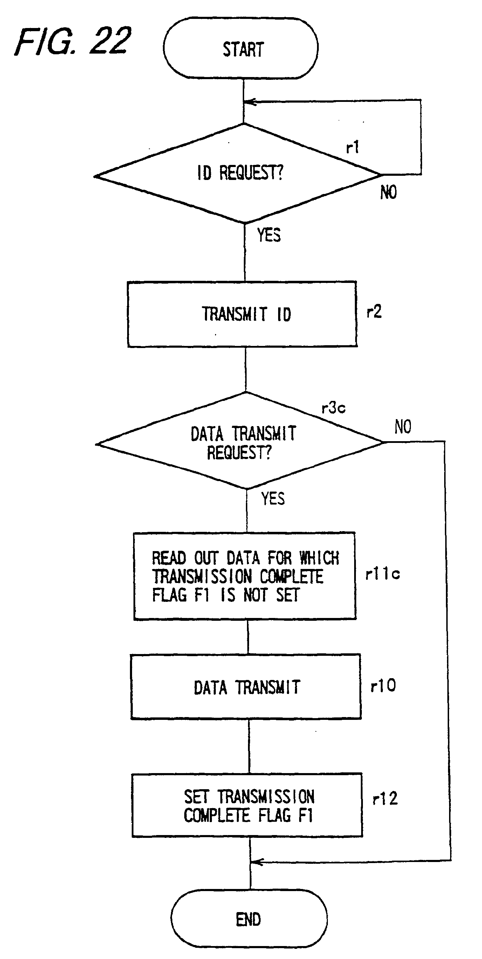

Figure 22 is a flow chart for explaining the operation of the control unit 31 in the controller 52 according to the sixth embodiment illustrated in Figures 20 and 21. Steps r1 and r2 in Figure 22 are the same as the corresponding steps in the foregoing embodiment. In step r3c, it is determined whether a data transmit request is made in step s10 in Figure 21 described above. If the data transmit request is received from the host computer 4, any data for which the transmission complete flag F1 is not set, that is, the flag value is a logic 0, as shown in Figure 20, is read out in the next step r11c. In this embodiment, for example, the transmission complete flag F1 is set, that is, the flag value is a logic 1, for indexes 0001 to j as shown in Figure 20. For the index (j+1) and subsequent indexes, on the other hand, the transmission complete flag F1 is down, that is, the flag value is a logic 0, as described above. Of the stored contents of the recording unit 9 shown in Figure 20, the indexes from (j+1) onward for which the transmission complete flag F1 is at logic 0 and the work data associated with the respective indexes (j+1) are read out in step r11c, and are transmitted to the host computer 4 in step r10. After the transmission, in step r12 the transmission complete flag F1 is set to logic 1 for each of the indexes from (j+1) onward for which the transmission is completed.

According to the fifth and sixth embodiment described with reference to Figures 16 to 22, the matching described in the earlier embodiments is not needed, and the transfer time can be reduced correspondingly.

In the seventh embodiment shown in Figure 23, work data stored in a master file 34 within the data base 33 are reordered by ID of the electro-fusion apparatus 1 by a sort means 49 provided in the control means 36, and stored in an apparatus file 35 within the data base 33 in the form previously shown in Figure 5. In the seventh embodiment, therefore, the storage unit 24 is omitted. The configuration of the seventh embodiment shown in Figure 23 is similar to that of the embodiment illustrated with reference to Figures 1 to 9, and the corresponding parts are designated by the same reference numerals.

The control means 36 comprises the transmitting and receiving unit 21, management unit 22, and matching unit 25 shown in Figure 1, and the matching unit 25, in response to a request from the management unit 22, matches a list of indexes corresponding to the ID sent from the electro-fusion apparatus 1 against a list of the indexes of the data recorded in the apparatus file 35 within the data base 33 for each electro-fusion apparatus 1. The matching is accomplished in accordance with the flow chart of Figure 24 which illustrates the operation of the control means 36 according to the seventh embodiment of Figure 23. The operation of the control means 36 shown in Figure 24 is the same as that described with reference to the flow of Figure 7, and the management unit 22 sends a transmit request requesting the transmission of data associated with any index that is not found in the apparatus file 35 as a result of matching.

According to this embodiment, the search unit 23 and storage unit 24 shown in Figure 1 are rendered unnecessary, eliminating the need to search the data base with the ID of the electro-fusion apparatus as the key, and the transfer time can be reduced correspondingly. More specifically, in Figure 24, the control means 36 need not perform the steps s2 and s4 shown in Figure 7, and the elimination of these steps s2 and s4 serves to simply the operation. Otherwise, the configuration and operation of the seventh embodiment are the same as those of the embodiment illustrated with reference to Figures 1 to 9.

The eighth embodiment shown in Figure 25 is similar to the embodiment illustrated with reference to Figures 1 to 9, and the corresponding parts are designated by the same reference numerals. In the eighth embodiment, however, a buffer 38 is provided in the electro-fusion apparatus 1 shown in Figure 1. Only the data stored in the buffer 38 is transferred to the host computer 4. The storage capacity M of the buffer 38 is arbitrarily set by an instruction entered from the input unit 11 to the control unit 6. Of the work data sets recorded in the control unit 6, up to M data sets can be stored in the buffer 38 in descending order of electro-fusion numbers starting with the newest electro-fusion number.

Figure 26 is a flow chart for explaining the operation of the control unit 6 according to the eighth embodiment shown in Figure 25. In step r01, the operator operates the input unit 11 and thereby sets the storage capacity M defining the amount of data to be transmitted at a time, that is, the number of data sets, M, that can be stored in the buffer 38. In step r02, data up to the storage capacity M is read from the recording unit 9, and stored in the buffer 38. Steps r1 to r5 are the same as the corresponding steps in Figure 8. In step r6, the data stored in the buffer 38 is transmitted to the host computer 4 in response to the data transmit request received from the host computer 4. Here, data sets, each consisting of an index and the work data associated with the index, are stored in the buffer 38 up to the storage capacity M in descending order of indexes, i.e., electro-fusion numbers starting with the newest electro-fusion number, as described above.

According to this embodiment, the operator can set the amount of data to be transmitted to the host computer 4 at a time to the desired number M.

In the eighth embodiment shown in Figure 25, the number of data sets to be transferred to the host computer 4 can be set as desired, but in the ninth embodiment described hereinafter, provisions are made so that (a) data up to a predetermined period W, for example, up to three days back from today, or (b) data up to a predetermined number of sets M1, for example, up to the past 30 sets, can be stored in the buffer 38. The period W or the number M1 can be set as desired by the operator using the input unit 11. The configuration and operation of the ninth embodiment are similar to those of the eighth embodiment shown in Figures 25 and 26 above. The operation of the ninth embodiment, however, differs from that of the step r01 in Figure 26 in that the period W or the number M1 is set by operating the input unit 11, and data up to the thus set period W or number M is read from the recording unit 9, and stored in the buffer 38 for each transmission operation. When setting the period W, the time measured by the clock means 43 for each index IDY is stored in the recording unit 9, so that the data up to the period W set from the input unit 11 can be accurately read out from the recording unit 9.

In the first to ninth embodiments described above, electro-fusion numbers not yet transmitted and their associated work data are transmitted from the electro-fusion apparatus 1 to the host computer 4 in accordance with a request made by the host computer 4, but in the 10th embodiment described hereinafter, provisions are made so that the operator can also specify transmission of only untransmitted data to the host computer 4 by operating the input unit 11 of the electro-fusion apparatus 1.

To achieve this, when work data is transmitted normally from the electro-fusion apparatus 1 to the host computer 4, the transmission complete flag F1 is set for the electro-fusion number of its index, as previously described with reference to Figures 20 to 22. When the operator operates the input unit 11 of the electro-fusion apparatus 1 for transmission, the ID of the electro-fusion apparatus 1, electro-fusion numbers for which the transmission complete flag is not set, and their associated work data are transmitted to the host computer 4. In this case, therefore, the control means of the host computer 4 need not be provided with the function of searching the data base or the function of matching the indexes of the electro-fusion numbers.

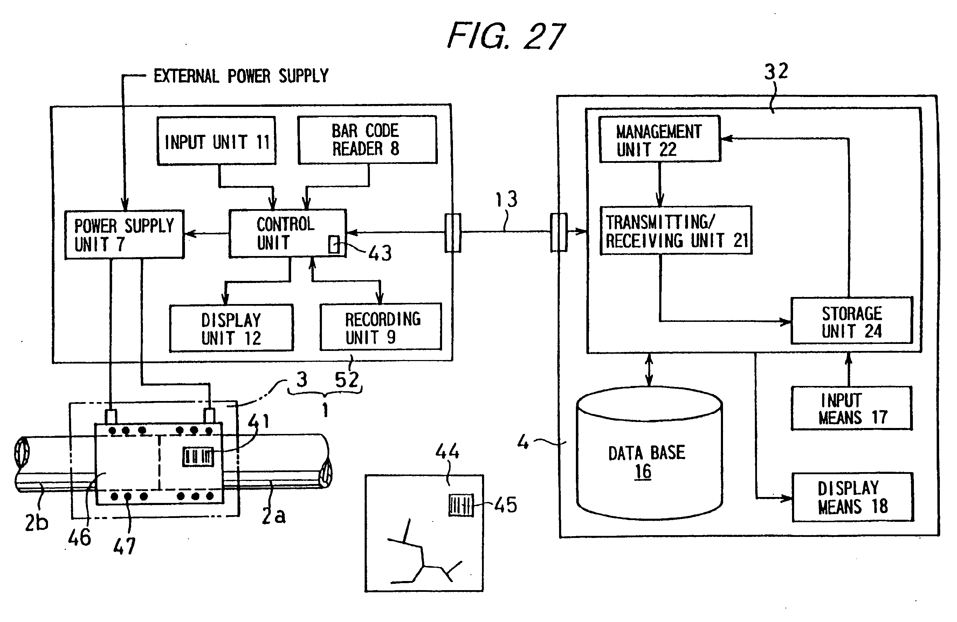

Figure 27 is a block diagram showing in simplified form the configuration of the 10th embodiment according to the present invention. The 10th embodiment shown in Figure 27 is similar in configuration to the embodiment shown in Figure 16, and the corresponding parts are designated by the same reference numerals.

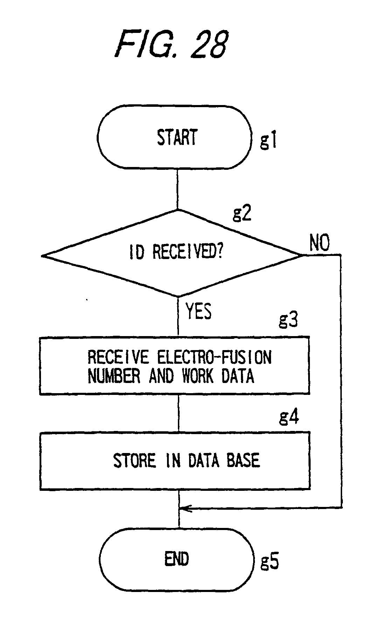

Figure 28 is a flow chart illustrating the operation of the control means 32 according to the 10th embodiment shown in Figure 27. The process proceeds from step g1 to step g2, and if it is determined that an ID signal is received from the controller 52, the index as the electro-fusion number corresponding to the received ID and the work data associated with that index are received in step g3, and stored in the data base 16.

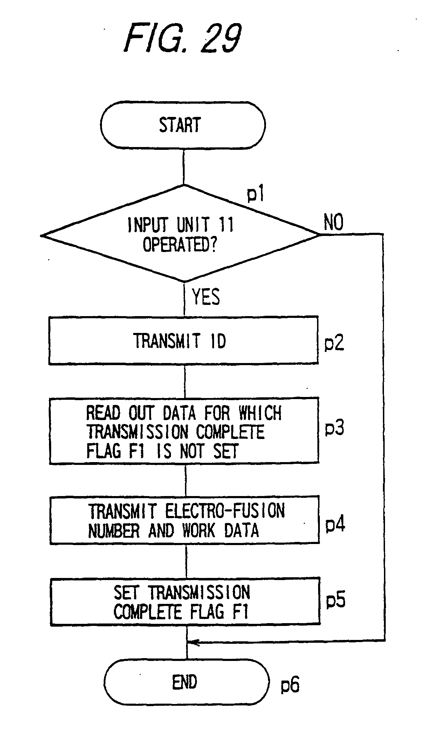

Figure 29 is a flow chart for explaining the operation of the control unit 31 provided in the controller 52 according to the 10th embodiment shown in Figures 27 and 28. In operation of the control unit 31, the operator operates the input unit 11 in step p1, directing that only data consisting of untrarismitted indexes and the work data associated with their indexes be transmitted to the host computer 4. Then, in step p2, a signal indicating the ID of the electro-fusion apparatus 1 is transmitted, and this ID signal is received in step g2 in Figure 28 described above.

In step p3, the stored contents of the recording unit 9, such as previously shown in Figure 20, are read, and data sets, each consisting of an index IDY for which the transmission complete flag F1 is not set, that is, the flag value is a logic 0, and the work data associated with the index IDY, are read out. In step p4, the data sets, each consisting of the thus readout index, i.e., the electro-fusion number, and the work data associated with that index, are transmitted to the host computer 4. In step p5, the transmission complete flag F1 indicating the completion of the transmission is set to logic 1 for each index IDY in the recording unit 9.

An 11th embodiment of the present invention will be described. The 11th embodiment is similar to the sixth embodiment previously described with reference to Figures 20 to 22, and the configuration is the same as that shown in Figure 16. In the 11th embodiment, the transmission complete flag F1 is used in the controller 52.

Figure 30(1) is a diagram showing the stored contents of the recording unit 9 in the controller 52. The stored contents of Figure 30(1) are fundamentally the same as those previously shown in Figure 20. Work data, a1 - am; b1 -bm, bₘ₊₁; c1 - cm; d1 - dm; and e1 - em, are stored in association with indexes A to E, and when any index and the work data associated with that index are transmitted from the controller 52 to the host computer 4, the corresponding transmission complete flag F1 is set to logic 1. What should be noted in this embodiment is that when a new piece of work data is added to the work data after transmission, the transmission complete flag F1 is unset to logic 0, and the work data is equivalently treated as untransmitted data. In Figure 32, it is assumed that the indexes A to C and their associated work data, a1 - am; b1 - bm; and c1 - cm, are stored in the storage unit 24 and hence in the data base 16, as shown in Figure 32 (2). The configuration of the 11th embodiment shown in Figure 30 is the same as that shown in Figure 16, and the operations illustrated in Figures 20 to 22 are performed in like manner here.

Figure 31 is a flow chart for explaining the operation of the control unit 6 provided in the controller 52 according to the 11th embodiment shown in Figure 30. Steps u1 to u8 in Figure 33 are the same as the corresponding steps shown in Figure 9. In the 11th embodiment, however, after the work data b1 - bm associated with the index B, for example, was stored in the recording unit 9 in step u8, it is determined in step u8a whether new additional data bₘ₊₁ has occurred or not, and if it is determined that additional data has occurred, then in the next step u8b the transmission complete flag F1, if set at logic 1, is unset to logic 0; if the flag value is logic 0 indicating the work data has not yet been transmitted, the flag is held at logic 0 in step u8b. As a result, in step r11c previously described with reference to Figure 22, the control unit 6 reads out the indexes B, D, and E and their associated work data, and transmits them in the next step r10 to the host computer 4. In this way, if new data bₘ₊₁ is added to the work data b1 - bm associated with the index B, the work data b1 - bₘ₊₁ is transmitted to the host computer 4 with fail.

The present invention can be applied not only to electro-fusion apparatuses, but can also be applied extensively for transferring data between a controller and a host computer in other kinds of apparatuses. A data set for each of the plurality of groups is data concerning one piece of work, and each data set consists of data elements. The data elements refer to individual data items, such as joint information, construction information, apparatus information, electro-fusion information, etc., for example, in the above described embodiments. The data transfer apparatus of the present invention is an apparatus for transferring data sets each consisting of a plurality of data elements, wherein the receiver side queries the transmitting side whether there has been a change in any data element, and only data sets in which there has been such a change are transferred. The data transfer apparatus of the present invention can also be modified in accordance with each of the above-described embodiments. Thus, the invention can be applied not only to electro-fusion apparatuses, but can also be applied extensively to various apparatuses in other technical fields.

### Industrial Applicability

According to the inventions of claims 1, 2, 7, and 8, when transferring work data stored in the electro-fusion apparatus to the host computer, only untransmitted work data or work data not stored in the data base of the host computer is transferred to the host computer; this serves to reduce the time required to transfer data, compared with the prior art method that transfers all the work data stored in the electro-fusion apparatus.

According to the inventions of claims 3 and 9, since the work data in the data base is reordered by ID of the electro-fusion apparatus, the time required to match the indexes of the work data stored in the data base against the indexes of the work data recorded in the electro-fusion apparatus can be reduced, and thus the time required to transfer work data can be reduced correspondingly.

According to the inventions of claims 4 and 10, since there is no need to match the indexes of the work data stored in the data base against the indexes of the work data recorded in the electro-fusion apparatus as in the previously described inventions, the time required to transfer work data is correspondingly reduced.

According to the invention of claim 5, untransmitted data can be transmitted by just operating the input unit of the electro-fusion apparatus.

According to the invention of claim 6, of the work data stored in the electro-fusion apparatus, only untransmitted data or, if necessary, all the stored data, can be transmitted.

According to the inventions of claims 11 and 12, the number of data sets to be transferred to the host computer can be set as desired by the operator.

According to the inventions of claims 13 and 14, the work data can be transferred to the host computer by setting the period or the number of electro-fusion operations as desired in accordance with the operator's data management system.

According to the electro-fusion apparatus controllers of claims 15 to 21, and the electro-fusion apparatus host computers of claims 22 to 26, the time required to transfer work data from the electro-fusion apparatus controller to the host computer can be reduced as described above.

According to the recording medium of claim 27 for use with the electro-fusion apparatus controller, and the recording medium of claim 28 for use with the electro-fusion apparatus host computer, the time required to transfer work data from the electro-fusion apparatus controller to the electro-fusion apparatus host computer can be reduced as described above, and by using such recording media, the present invention can be easily implemented in a configuration that uses an existing microcomputer or the like.

The data transfer apparatus of claim 29 can be applied extensively to other technical fields than the field of electro-fusion apparatus, can reduce the time required to transfer data from the controller to the host computer.

According to the invention of claim 30, index matching is performed using the discriminating means, and according to the invention of claim 31, untransmitted data sets can be discriminated without transferring indexes, that is, without performing the matching.

## Claims

1. A method for transferring work data of an electro-fusion apparatus concerning electro-fusion joint installation work, stored in an electro-fusion apparatus, to a host computer after electro-fusion work is completed, comprising:
transferring to the host computer, only data yet untransmitted to the host computer out of the stored data.

2. The method for transferring work data of an electron-fusion apparatus of claim 1, the method comprising the steps of:
transmitting an ID of the electro-fusion apparatus to the host computer from the electro-fusion apparatus to the host computer;
retrieving work data with the transmitted ID of the electro-fusion apparatus as a key from a data base in the host computer;
matching indexes IDX of the work data retrieved from the data base against indexes IDY of the work data recorded in the electro-fusion apparatus; and
when the indexes IDY recorded in the electro-fusion apparatus contain an index IDYi that does not match any one of the indexes stored in the data base IDX, transferring only data associated with that index IDYi from the electro-fusion apparatus to the host computer.

3. The method for transferring work data of an electron-fusion apparatus of claim 1, the method comprising the steps of:
reordering work data in a data base at the host computer by ID of electro-fusion apparatus;
transmitting an ID of the electro-fusion apparatus from the electro-fusion apparatus to the host computer;
matching indexes IDX of the work data stored in the data base, corresponding to the transmitted ID of the electro-fusion apparatus, against indexes IDY of the work data recorded in the electro-fusion apparatus; and
when the indexes IDY recorded in the electro-fusion apparatus contain an index IDYi that does not match any one of the indexes stored in the data base IDX, transferring only data associated with that index IDYi from the electro-fusion apparatus to the host computer.

4. The method for transferring work data of an electron-fusion apparatus of claim 1, the method comprising the steps of:
transmitting an ID of the electro-fusion apparatus from the electro-fusion apparatus to the host computer;
of indexes of the work data stored in the data base, corresponding to the transmitted ID of the electro-fusion apparatus, transmitting an index k of work data of a last electro-fusion operation, to the electro-fusion apparatus; and
transferring to the host computer all work data having indexes (k+1) to L newer than the index k of the work data transmitted to the electro-fusion apparatus.

5. The method for transferring work data of an electron-fusion apparatus of claim 1, wherein an ID of the electro-fusion apparatus and out of the work data stored in the apparatus work data yet untransmitted to the host computer is transmitted to the host computer by operating an input unit 11 of the electro-fusion apparatus.

6. A method for transferring work data of an electro-fusion apparatus concerning electro-fusion joint installation work, stored in an electro-fusion apparatus, to a host computer after electro-fusion work is completed, comprising:
selection between a mode for transmitting only untransmitted data out of the work data stored in the apparatus and a mode for transmitting all the stored work data is made by operating an input unit 11 of the electro-fusion apparatus.

7. A data transfer apparatus for electro-fusion apparatus, in which work data concerning electro-fusion joint installation work which is stored in the electro-fusion apparatus, is transferred to a host computer via communication means after electro-fusion work is completed, comprising:
a data base provided in the host computer, for storing work data concerning work performed using the electro-fusion apparatus; and
control means 15, 29, 32, 36, provided in the host computer, having a function for requesting the electro-fusion apparatus to transmit an ID of the electro-fusion apparatus and indexes of work data recorded in the electro-fusion apparatus, a function for retrieving work data with the transmitted ID of the electro-fusion apparatus as a key from the data base, and a function for matching the indexes of the retrieved work data against the indexes of the work data transmitted from the electro-fusion apparatus, and for requesting the electro-fusion apparatus to transmit work data whose index is not stored in the data base.

8. A data transfer apparatus for electro-fusion apparatus, in which work data concerning electro-fusion joint installation work which is stored in the electro-fusion apparatus, is transferred to a host computer via communication means after electro-fusion work is completed, comprising:
a data base provided in the host computer, for storing the work data concerning the work performed using the electro-fusion apparatus;
control means provided in the host computer, having a function for requesting the electro-fusion apparatus to transmit an ID of the electro-fusion apparatus, and a function for retrieving work data with the transmitted ID of the electro-fusion apparatus as a key from the database, and for transmitting indexes of the retrieved work data to the electro-fusion apparatus;
a recording unit provided in the electro-fusion apparatus, for recording the work data for each electro-fusion joint installation by assigning an index comprising an electro-fusion number; and
a control unit 6 provided in the electro-fusion apparatus, having a function for controlling the electro-fusing of an electro-fusion joint to a resin pipe, based on an input condition such as the joint information, and a function for matching indexes IDY of the work data recorded in the recording unit against indexes IDX transmitted from the host computer and, when there is an index IDYi that does not match any one of the indexes IDX transmitted from the host computer, transmitting work data associated with that index IDXi to the host computer.

9. The data transfer apparatus for electro-fusion apparatus of claim 7, wherein the control means 36 has a function 49 for reordering the work data in the data base by ID of the electro-fusion apparatus, instead of the function for retrieving the work data with the ID of the electro-fusion apparatus as the key from the data base.

10. A data transfer apparatus for electro-fusion apparatus, in which work data concerning electro-fusion joint installation work which is stored in the electro-fusion apparatus, is transferred to a host computer via communication means after electro-fusion work is completed, comprising:
a data base provided in the host computer, for storing the work data concerning the work performed using the electro-fusion apparatus;
control means having a function for requesting the electro-fusion apparatus to transmit an ID of the electro-fusion apparatus, and a function for retrieving work data with the transmitted ID of the electro-fusion apparatus as a key from the data base, and for transmitting, of indexes of the work data stored in the data base, corresponding to the transmitted ID of the electro-fusion apparatus, an index k of work data of a last electro-fusion operation, to the electro-fusion apparatus;
a recording unit, provided in the electro-fusion apparatus, for recording the work data for each electro-fusion joint installation by assigning an index comprising an electro-fusion number; and
a control unit provided in the electro-fusion apparatus, having a function for controlling the electro-fusing of an electro-fusion joint to a resin pipe, based on an input condition such as joint information, and a function for reading, from the recording unit, work data having newer indexes (k+1) to L than an index k transmitted from the host computer, and for transmitting the readout work data to the host computer.

11. A method for transferring work data of an electro-fusion apparatus concerning electro-fusion joint installation work, stored in an electro-fusion apparatus, to a host computer after electro-fusion work is completed, wherein such transfer of data is settable that data of a large number of electro-fusion works is transferred at a time in cases where transfer is performed for a long period of time, and that data of a small number of electro-fusion works is transferred at a time in cases where the transfer is performed for a short period of time.

12. A data transfer apparatus for electro-fusion apparatus, in which work data concerning electro-fusion joint installation work which is stored in the electro-fusion apparatus, is transferred to a host computer via communication means after electro-fusion work is completed, comprising:
a recording unit provided in the electro-fusion apparatus, for recording the work data for each electro-fusion joint installation by assigning an electro-fusion number in the order of installation;
a buffer 38 provided in the elecro-fusion apparatus, whose storage capacity is variably settable, for storing work data in descending order of electro-fusion numbers starting with newest electro-fusion number assigned work data out of the data recorded in the recording unit; and
a control unit 6 provided in the electro-fusion apparatus, having a function for controlling the electro-fusing of an electro-fusion joint to a resin pipe, based on an input condition such as joint information, and a function for transferring the work data stored in the buffer 38 to the host computer.

13. A method for transferring work data of an electro-fusion apparatus concerning electro-fusion joint installation work, stored in an electro-fusion apparatus, to a host computer after electro-fusion work is completed, comprising:
transferring work data in accordance with a preset period or number of electro-fusion operations.

14. A data transfer apparatus for electro-fusion apparatus, in which work data concerning electro-fusion joint installation work which is stored in the electro-fusion apparatus, is transferred to a host computer via communication means after electro-fusion work is completed, comprising:
a recording unit provided in the electro-fusion apparatus, for recording the work data for each electro-fusion joint installation by assigning an electro-fusion number in the order of installation; and
a control unit provided in the electro-fusion apparatus, having a function for controlling electro-fusing of an electro-fusion joint to a resin pipe, based on an input condition such as joint information, and a function for transferring the work data recorded in the recording unit to the host computer for every preset period or every preset number of electro-fusion operations.

15. An electro-fusion apparatus, in which work data concerning electro-fusion joint installation work which is stored in the electro-fusion apparatus, is transferred to a host computer via communication means after electro-fusion work is completed, comprising:
a data base provided in the host computer, for storing work data concerning work performed using the electro-fusion apparatus;
control means, provided in the host computer, for storing the work data transferred from the electro-fusion apparatus into the data base for each electro-fusion work index in association with an ID of the electro-fusion apparatus;
flag setting means, provided in the electro-fusion apparatus, for setting a transmission complete flag F1 for the work data, on an index by index basis, transmitted from the electro-fusion apparatus to the host computer;
a recording unit, provided in the electro-fusion apparatus, for storing the index, work data and transmission complete flag for each electro-fusion operation in association with each other; and
means, provided in the electro-fusion apparatus, for reading from the recording unit, on an index by index basis, work data for which the transmission complete flag F1 is not set, and for transmitting the readout work data to the host computer.

16. The electro-fusion apparatus of claim 15, wherein the flag setting means unsets the transmission complete flag F1 when additional data bₘ₊₁ is added to the work data already transmitted to the host computer.

17. An electro-fusion apparatus controller in an apparatus for transferring work data concerning electro-fusion joint installation work which is stored in an electro-fusion apparatus to a host computer via communication means after electro-fusion work is completed, the controller comprising:
a recording unit for storing work data together with a corresponding index IDY for each electro-fusion operation performed using the electro-fusion apparatus;
index transmitting means for reading the index IDY from the recording unit and transmitting the same; and
work data transmitting means for receiving a designated index IDYi associated with the work data to be transmitted from the electro-fusion apparatus, out of the indexes IDY transmitted by the index transmitting means to the host computer, and for transmitting the work data associated with the designated index IDYi by reading out the work data from the recording unit.

18. An electro-fusion apparatus controller in an apparatus for transferring work data concerning electro-fusion joint installation work which is stored in an electro-fusion apparatus to a host computer via communication means after electro-fusion work is completed, the controller comprising:
a recording unit for storing work data together with a corresponding index IDY for each electro-fusion operation performed using the electro-fusion apparatus; and
means 6 for receiving indexes IDX from the host computer, and for matching the indexes IDY read from the recording unit against the received indexes IDX and, if the indexes IDY read from the recording unit contain a new index IDYi that does not match any one of the received indexes IDX, then transmitting the new index IDYi to the host computer together with the work data associated with the new index IDYi.

19. An electro-fusion apparatus controller in an apparatus for transferring work data concerning electro-fusion joint installation work which is stored in an electro-fusion apparatus to a host computer via communication means after electro-fusion work is completed, the controller comprising:
a recording unit for storing work data together with a corresponding index IDY for each electro-fusion operation performed using the electro-fusion apparatus; and
means for receiving from the host computer the newest index k stored in the host computer, and for reading, from the recording unit, work data having newer indexes (k+1) to L than the newest index k received from the host computer, and transmitting the readout work data to the host computer.

20. An electro-fusion apparatus controller in an apparatus for transferring work data concerning electro-fusion joint installation work which is stored in an electro-fusion apparatus to a host computer via communication means after electro-fusion work is completed, the controller comprising:
a recording unit for storing work data together with a corresponding index IDY for each electro-fusion operation performed using the electro-fusion apparatus;
flag setting means for setting a flag F1 for work data that is stored in the recording unit but not yet transmitted to the host computer; and
means for receiving a transmit request signal from the host computer, and for transmitting to the host computer the work data for which the flag F1 is not set by the flag setting means.

21. An electro-fusion apparatus controller in an apparatus for transferring work data concerning electro-fusion joint installation work which is stored in an electro-fusion apparatus to a host computer via communication means after electro-fusion work is completed, the controller comprising:
a recording unit for storing work data together with a corresponding index IDY for each electro-fusion operation performed using the electro-fusion apparatus;
a buffer 38;
input means 11 for setting at least one of transmission conditions consisting of a preset storage capacity of the buffer 38, a period during which the work data has been collected in the recording unit, and the number of electro-fusion operations; and
means for reading the work data stored in the recording unit, including the newest work data and to be transmitted to the host computer, into the buffer 38 in accordance with the transmission condition set by the input means 11, and for transmitting the stored contents of the buffer 38 to the host computer.

22. A host computer for an electro-fusion apparatus in an apparatus for transferring work data concerning electro-fusion joint installation work which is stored in the electro-fusion apparatus to the host computer via communication means after electro-fusion work is completed, the host computer comprising:
a data base for storing work data together with a corresponding index IDX for each electro-fusion operation performed using the electro-fusion apparatus; and
means for matching indexes IDY received from the electro-fusion apparatus against the indexes IDX read from the data base, designating from among the received indexes IDY a new index IDYi that does not match any one of the indexes IDX read from the data base, and transmitting the designated index IDYi to the electro-fusion apparatus, and for receiving the work data associated with the designated index IDYi from the electro-fusion apparatus, and storing the received work data in the data base.

23. A host computer for an electro-fusion apparatus in an apparatus for transferring work data concerning electro-fusion joint installation work which is stored in the electro-fusion apparatus to the host computer via communication means after electro-fusion work is completed, the host computer comprising:
a data base for storing work data together with a corresponding index IDX for each electro-fusion operation performed using the electro-fusion apparatus;
transmitting means for reading the indexes IDX from the data base and transmitting the same to the electro-fusion apparatus; and
means for storing in the data base a designated index IDYi that is received from the electro-fusion apparatus, and that does not match any one of the indexes IDX read from the data base, together with the work data associated with the designated index IDYi and received from the electro-fusion apparatus.

24. A host computer for an electro-fusion apparatus in an apparatus for transferring work data concerning electro-fusion joint installation work which is stored in the electro-fusion apparatus to the host computer via communication means after electro-fusion work is completed, the host computer comprising:
a data base for storing work data together with a corresponding index IDX for each electro-fusion operation performed using the electro-fusion apparatus;
means for reading the newest index k from the data base and transmitting the same to the electro-fusion apparatus; and
means for receiving, from the electro-fusion apparatus, work data having newer indexes (k+1) to L than the newest index k in the host computer, and storing the received work data in the data base.

25. A host computer for an electro-fusion apparatus in an apparatus for transferring work data concerning electro-fusion joint installation work which is stored in the electro-fusion apparatus to the host computer via communication means after electro-fusion work is completed, the host computer comprising:
a data base for storing work data together with a corresponding index IDX for each electro-fusion operation performed using the electro-fusion apparatus;
means for transmitting a transmit request signal to the electro-fusion apparatus; and
means for receiving from the electro-fusion apparatus an index IDY not yet received at the host computer and the work data associated with the index IDY, and for storing the index IDY and the work data in the data base.

26. A host computer for an electro-fusion apparatus in an apparatus for transferring work data concerning electro-fusion joint installation work which is stored in the electro-fusion apparatus to the host computer via communication means after electro-fusion work is completed, the host computer comprising:
a data base for storing work data together with a corresponding index IDX for each electro-fusion operation performed using the electro-fusion apparatus;
reordering means 49 for reordering the work data in the data base by ID of the electro-fusion apparatus and storing the reordered work data in the data base; and
means for matching indexes IDY received from the electro-fusion apparatus against the indexes IDX read from the data base, designating from among the received indexes IDY a new index IDYi that does not match any one of the indexes IDX read from the data base, and transmitting the designated index IDYi to the electro-fusion apparatus, and for receiving the work data associated with the designated index IDYi from the electro-fusion apparatus, and storing the received work data in the data base.

27. A recording medium having a computer program stored thereon for operating any one of the electro-fusion apparatus controllers of claims 17 to 21.

28. A recording medium having a computer program stored thereon for operating any one of the electro-fusion apparatus host computers of claims 22 to 26.

29. A data transfer apparatus for transferring data sets, one for each of a plurality of groups, from a controller to a host computer, each data set comprising a combination of a plurality of data elements and an identification index for identifying the data set,
wherein the controller or the host computer includes:
means for discriminating data sets already transferred from the controller to the host computer from data sets not yet transferred; and
means for transferring only the not-yet-transferred data discriminated by the discriminating means from the controller to the host computer.

30. The data transfer apparatus of claim 29, wherein the discriminating means discriminates each data set by transmitting and receiving the identification index between the controller and the host computer.

31. The data transfer apparatus of claim 29, wherein the discriminating means is provided in the controller, and discriminates each data set to determine whether or not the data set has been transferred to the host computer.
